(19) Europäisches Patentamt
European Patent Office
Office européen des brevets

(11) EP 0 799 266 B1

(12) EUROPÄISCHE PATENTSCHRIFT

(45) Veröffentlichungstag und Bekanntmachung des Hinweises auf die Patenterteilung:
**12.05.1999 Patentblatt 1999/19**

(21) Anmeldenummer: **95942106.6**

(22) Anmeldetag: **11.12.1995**

(51) Int Cl.[6]: **C08G 61/08**

(86) Internationale Anmeldenummer:
**PCT/EP95/04877**

(87) Internationale Veröffentlichungsnummer:
**WO 96/20235 (04.07.1996 Gazette 1996/30)**

(54) **POLYMERISIERBARE ZUSAMMENSETZUNG UND POLYMERISATIONSVERFAHREN**

POLYMERISABLE COMPOUND AND A POLYMERISATION PROCESS

COMPOSITION POLYMERISABLE ET PROCEDE DE POLYMERISATION

(84) Benannte Vertragsstaaten:
**AT BE CH DE DK ES FR GB IT LI NL SE**

(30) Priorität: **23.12.1994 CH 3920/94**

(43) Veröffentlichungstag der Anmeldung:
**08.10.1997 Patentblatt 1997/41**

(73) Patentinhaber: **Ciba Specialty Chemicals Holding Inc.**
**4057 Basel (CH)**

(72) Erfinder:
- **HAFNER, Andreas**
**CH-3177 Laupen (CH)**
- **VAN DER SCHAAF, Paul, Adriaan**
**CH-1700 Fribourg (CH)**
- **MÜHLEBACH, Andreas**
**CH-1782 Belfaux (CH)**

(56) Entgegenhaltungen:
- **JOURNAL OF THE CHEMICAL SOCIETY, CHEMICAL COMMUNICATIONS, Nr. 11, 7.Juni 1995, LETCHWORTH GB, Seiten 1127-1128, XP002000195 A.W.STUMPF ET ALL.: "Ruthenium-based Catalyst for the Ring Opening Polymerisation of Low-strain Cyclic Olefins and of Functionalised Derivatives of Norbornene and Cyclooctene."**

EP 0 799 266 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine Zusammensetzung aus Dicyclopentadien (DCPD) alleine oder in Mischung mit mindestens einem gespannten Cycloolefin und einem Einkomponenten-Katalysator aus der Gruppe der Ruthenium- und Osmiumphosphine; ein Verfahren zur thermischen Metathesepolymerisation von Dicyclopentadien; beschichtete Materialien; und lineare oder vernetzte Copolymere aus Dicyclopentadien und mindestens einem gespannten Cycloolefin.

Die thermisch induzierte Ringöffnungs-Metathese-Polymerisation unter Verwendung katalytischer Mengen von Metallverbindungen ist schon seit längerem bekannt und vielfach in der Literatur beschrieben [(siehe zum Beispiel Ivin, K.J., Olefin Metathesis 1-12, Academic Press, London (1983)]. Solche Polymere werden industriell hergestellt und sind kommerziell erhältlich, zum Beispiel als Vestenamer®.

Feldman et al. [Feldman, J., Schrock, R.R., in: Lippard, S.J. (Hrsg.), Progress in Inorganic Chemistry 39:1-74 (1991)] beschreiben Molybdän- und Wolframalkylidenkomplexe, die alleine nur schwache, aber zusammen mit Lewis-Säuren wirksame thermische Katalysatoren für die Polymerisation von Cycloolefinen sind.

In der WO 93/13171 werden luft- und wasserstabile Einkomponenten- und Zweikomponenten-Katalysatoren auf der Basis von Carbonylgruppen enthaltenden Molybdän- und Wolframverbindungen sowie Ruthenium- und Osmiumverbindungen mit mindestens einem Polyenliganden für die thermische Metathesepolymerisation und eine photoaktivierte Metathesepolymerisation von gespannten Cycloolefinen, besonders Norbornen und Norbornenderivaten, beschrieben. Andere polycyclische - vor allen Dingen nicht-kondensierte polycyclische Cycloolefine werden nicht erwähnt. Die verwendeten Einkomponenten-Katalysatoren der Rutheniumverbindungen, nämlich $[Ru(Cumen)Cl_2]_2$ und $[(C_6H_6)Ru(CH_3CN)_2Cl]^+PF_6^-$ können zwar durch UV-Bestrahlung aktiviert werden; die Lagerstabilität der Zusammensetzungen mit Norbornen sind jedoch völlig unzureichend. Diese Katalysatoren vermögen die bekannten Zweikomponenten-Katalysatoren nur unzureichend zu ersetzen.

Demonceau et al. [Demonceau, A., Noels, A.F., Saive, E., Hubert, A.J., J. Mol. Catal. 76:123-132 (1992)] beschreiben $(C_6H_5)_3]_3PRuCl_2$, $(C_6H_5)_3]_3PRuHCl$ und $(p\text{-}Cumen)RuCl_2P(C_6H_{11})_3$ als thermische Katalysatoren für die ringöffnende Metathese-polymerisation von Norbornen, einem kondensierten Polycycloolefin. Diese Katalysatoren haben sich auf Grund der zu geringen Aktivität bei der industriellen Herstellung nicht durchsetzen können. Es wird daher vorgeschlagen, die Aktivität durch den Zusatz von Diazoestern zu steigern. Es wird auch erwähnt, dass lediglich $(p\text{-}Cumen)RuCl_2P(C_6H_{11})_3$ Norbornen in relativ kurzer Zeit bei 60°C zu polymerisieren vermag. Als weiteres Monomer wird noch Cycloocten erwähnt. Andere Cycloolefine für die Metathesepolymerisation werden nicht erwähnt.

In der WO 93/20111 werden Osmium- und Rutheniumcarbenverbindungen mit Phosphinliganden, zum Beispiel $[(H_5C_6)_3P]_2Cl_2{=}CH\text{-}CH{=}C(C_6H_5)_2$, als rein thermische Katalysatoren für die ringöffnende Metathesepolymerisation von gespannten Cycloolefinen beschrieben, wobei Cyclodiene wie Dicyclopentadien als Katalysatorinhibitoren wirken und nicht polymerisiert werden können. Diese Katalysatoren sind schwer herstellbar und mässig stabil gegenüber Feuchtigkeit, so dass zur Lagerung und Verarbeitung von Zusammensetzungen mit diesen Katalysatoren besondere Schutzvorkehrungen getroffen werden müssen.

Tanielan et al. [Tanielan, C., Kieffer, R., Harfouch, A., Tetrahedron Letters 52:4589-4592 (1977)] beschreiben, dass die Rutheniumverbindung $RuCl_2[P(C_6H_5)_3]_3$ durch Dicyclopentadien desaktiviert wird und keine Polymeren durch eine thermische Metathesepolymerisation gebildet werden.

Es wurde nun überraschend gefunden, dass Dicyclopentadien dann mit einem Einkomponenten-Katalysator einer thermischen Metathesepolymerisation zugänglich wird, wenn man carbenfreie Ruthenium(II)- oder Osmium(II)-Phosphin-Katalysatoren verwendet. Es wurde ferner gefunden, dass man sogar lineares Polycyclopentadien herstellen kann, wenn man die Polymerisation in geeigneten Lösungsmitteln durchführt, und vernetzte Polymerisate erhält, wenn man die Polymerisation in Substanz durchführt. Es wurde auch gefunden, dass die Polymerisation selbst in Gegenwart von Kunststoffzusätzen wie zum Beispiel Füllstoffen erfolgt, und Formkörper, Folien (Filme) oder Beschichtungen mit ausgezeichneten physikalischen und mechanischen Eigenschaften erhalten werden. Es wurde auch beobachtet, dass die Zusammensetzungen aus DCPD und carbenfreien Ruthenium(II)- oder Osmium(II)-Phosphin-Katalysatoren luft- und feuchtigkeitsstabil sind, und daher sowohl eine hohe Lagerstabilität gegebenenfalls unter Lichtausschluss aufweisen, als auch für die Polymerisation keine besonderen Schutzmassnahmen notwendig sind, was erhebliche Vorteile bei der Verarbeitung bietet. Es wurde auch noch gefunden, dass man DCPD bei Verwendung dieser Katalysatoren zusammen mit gespannten Cycloolefinen als Comonomeren copolymerisieren kann. Hierdurch können gezielt Eigenschaften modifiziert und auf den gewünschten Verwendungszweck angepasst werden.

Ein Gegenstand der Erfindung ist eine Zusammensetzung aus (a) Dicyclopentadien alleine oder in Mischung mit einem gespannten Cycloolefin und (b) einer katalytischen Menge mindestens einer carbenfreien, zweiwertig-kationischen Ruthenium- oder Osmiumverbindung als Einkomponenten-Katalysator, die mindestens eine Phosphingruppe und insgesamt 2 bis 5 Liganden an das Metallatom gebunden enthält, und die Säureanionen zum Ladungsausgleich enthält.

Insgesamt bedeutet im Rahmen der Erfindung die Summe der Phosphingruppen und der Liganden. Bevorzugt

enthalten die Ruthenium- und Osmiumverbindungen insgesamt 2 oder 3 Liganden.

Bei der Phosphingruppe handelt es sich bevorzugt um tertiäre Phosphine und Phosphite, insbesondere um Phosphine mit 3 bis 40, bevorzugter 3 bis 30 und besonders bevorzugt 3 bis 24 C-Atomen.

Dicyclopentadien der Formel

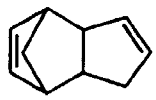

ist ein Dimeres des Cyclopentadiens, das bekannt und käuflich ist. Es ist jedoch bekannt, dass Dicyclopentadien mit Cyclopentadien weitere Diels-Alder-Addukte bildet und so Oligomere bildet, die ebenfalls verwendbar sind. Erfindungsgemäss kann also reines Dicyclopentadien, Oligomere des Dicyclopentadien oder Mischungen davon in der Zusammensetzung verwendet werden. Die Oligomeren können der Formel

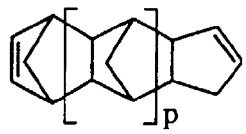

entsprechen, worin p für eine Zahl von 1 bis 100, bevorzugt 1 bis 50, besonders bevorzugt 1 bis 20 und insbesondere bevorzugt 1 bis 10 steht.

Gespannte Cycloolefine, die als Comonomere in der erfindungsgemässen Zusammensetzung enthalten sein können, sind in grossser Vielzahl bekannt.

Bei den cyclischen Olefinen kann es sich um monocyclische oder polycyclische kondensierte und/oder überbrückte Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität der Ruthenium- und Osmiumverbindungen nicht beeinträchtigen. Bei den Cycloolefinen handelt es sich um gespannte Ringe beziehungsweise Ringsysteme.

Wenn die cyclischen Olefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

Ankondensierte alicyclische Ringe enthalten bevorzugt 3 bis 8, besonders bevorzugt 4 bis 7 und insbesondere bevorzugt 5 oder 6 Ring-C-Atome.

In einer bevorzugten Ausführungsform des erfindungsgemässen Verfahrens entsprechen die Cycloolefine der Formel I

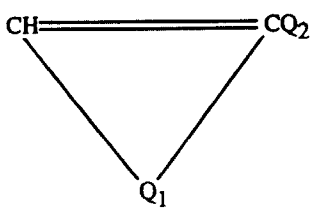

(I),

worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$, -COOM,

$-SO_3M$, $-PO_3M$, $-COO(M_1)_{½}$, $-SO_3(M_1)_{½}$, $-PO_3(M_1)_{½}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X- substituiert ist; oder bei dem zwei benachbarte C-Atome mit -CO-O-CO- oder -CO-$NR_5$-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si$-$(O)_u$-, -COOM, $-SO_3M$, $-PO_3M$, $-COO(M_1)_{½}$, $-SO_3(M_1)_{½}$, $-PO_3(M_1)_{½}$, $C_1$-$C_{20}$-Alkyl, $C_1$-$C_{20}$-Halogenalkyl, $C_{1}$-$_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2$-, -O-C(O)-, -C(O)-O-, -C(O)-$NR_5$-, -$NR_{10}$-C(O)-, $-SO_2$-O- oder -O-$SO_2$- stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten:

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder -C(O)-$NR_{12}$- ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, -$NR_9$- und -N= ausgewählt sind; und $R_9$ Wasserstoff, $C_1$-$C_{12}$-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

Ist in den Verbindungen der Formel I ein asymmetrisches Zentrum vorhanden, so hat dies zur Folge, daß die Verbindungen in optisch isomeren Formen auftreten können. Einige Verbindungen der Formel I können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel I umfaßt somit alle möglichen Stereoisomeren, die in Form von Enantiomeren, Tautomeren, Diastereomeren, E/Z-Isomeren oder deren Gemische vorliegen.

In den Definitionen der Substituenten können die Alkyl-, Alkenyl- und Alkinylgruppen geradkettig oder verzweigt sein. Dasselbe gilt auch für die Alkylteile von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sek-Butyl, tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel der Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl, n-Octadec-4-enyl.

Beim Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-Propyl, 2-Cyano-n-Butyl, 1-Cyano-iso-Butyl, 1-Cyano-sek-Butyl, 1-Cyano-tert-Butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, Phenbutyl oder α,α-Dimethylbenzyl handeln.

Aryl enthält bevorzugt 6 bis 10 C-Atome. Es kann sich beispielsweise um Phenyl, Pentalin, Inden, Naphthalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, 1-Butyloxy, sek.-Butyloxy und t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen, Fluor, Chlor, Brom und Jod vorzugsweise Fluor, Chlor und Brom zu verstehen.

Für das erfindungsgemäße Verfahren besonders gut geeignete Verbindungen der Formel I sind jene, worin $Q_2$ Wasserstoff bedeutet.

Ferner sind für die Polymerisation Verbindungen der Formel I bevorzugt, worin der alicyclische Ring, den $Q_1$ zusammen mit der -CH=$CQ_2$- Gruppe bildet, 3 bis 16, bevorzugter 3 bis 12 und besonders bevorzugt 3 bis 8 Ringatome aufweist, und wobei es sich um ein monocyclisches, bicyclischen, tricyclisches oder tetracyclisches Ringsystem handeln kann.

Mit besonderem Vorteil läßt sich das erfindungsgemäße Verfahren mit denjenigen Verbindungen der Formel I durchführen, worin $Q_1$ ein Rest mit mindestens einem Kohlenstoffatom ist, der zusammen mit der -CH=$CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, -$NO_2$, $R_1R_2R_3Si$-$(O)_u$-, -COOM, -$SO_3M$, -$PO_3M$, -COO$(M_1)_{½}$, -$SO_3(M_1)_{½}$, -$PO_3(M_1)_{½}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Arakyl, $C_3$-$C_6$-Heterocycloalkyl, $C_3$-$C_{12}$-Heteroaryl, $C_4$-$C_{12}$-Heteroarakyl oder $R_4$-X- substituiert ist; oder bei dem zwei benachbarte C-Atome in diesem Rest $Q_1$ mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -$NO_2$, $R_6R_7R_8Si$-, -COOM, -$SO_3M$, -$PO_3M$, -COO$(M_1)_{½}$, -$SO_3(M_1)_{½}$, -$PO_3(M_1)_{½}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroarakyl oder $R_{13}$-$X_1$- substituiert ist; X und $X_1$ unabhängig voneinander für -O-, -S-, -CO-, -SO-, -$SO_2$-, -O-C(O)-, -C(O)-O-, -C(O)-$NR_5$-, -$NR_{10}$-C(O)-, -$SO_2$-O- oder -O-$SO_2$- stehen; $R_1$, $R_2$ und $R_3$ unabhängig voneinander $C_1$-$C_6$-Alkyl, $C_1$-$C_6$-Perfluoralkyl, Phenyl oder Benzyl bedeuten; M für ein Alkalimetall und $M_1$ für ein Erdalkalimetall stehen; $R_4$ und $R_{13}$ unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten; $R_5$ und $R_{10}$ unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind; $R_6$, $R_7$ und $R_8$ unabhängig voneinander $C_1$-$C_6$-Alkyl, $C_1$-$C_6$-Perfluoralkyl, Phenyl oder Benzyl darstellen; u für 0 oder 1 steht; wobei der mit $Q_1$ gebildete alicyclische Ring gegebenenfalls weitere nichtaromatische Doppelbindungen enthält; $Q_2$ Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet; $R_{11}$ $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt; $X_2$ -C(O)-O- oder -C(O)-$NR_{12}$- ist; und $R_{12}$ Wasserstoff, $C_1$-$C_6$-Alkyl, Phenyl oder Benzyl bedeutet; wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, -$NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und $R_9$ Wasserstoff, $C_1$-$C_6$-Alkyl, Phenyl oder Benzyl bedeutet.

Aus dieser Gruppe sind diejenigen Verbindungen der Formel I bevorzugt, worin $Q_1$ ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -$NO_2$, $R_1R_2R_3Si$-, -COOM, -$SO_3M$, -$PO_3M$, -COO$(M_1)_{½}$, -$SO_3(M_1)_{½}$, -$PO_3(M_1)_{½}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X-substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -$NO_2$, $R_6R_7R_8Si$-, -COOM, -$SO_3M$, -$PO_3M$, -COO$(M_1)_{½}$, -$SO_3(M_1)_{½}$, -$PO_3(M_1)_{½}$, $C_1$-$C_6$-Alkyl, $C_1$-$C_6$-Halogenalkyl, $C_1$-$C_6$-Hydroxyalkyl, $C_1$-$C_4$-Cyanodkyl, $C_3$-$C_6$-Cycloalkyl, Phenyl, Benzyl oder $R_{13}$-$X_1$-substituiert ist; $R_1$, $R_2$ und $R_3$ unabhängig voneinander $C_1$-$C_4$-Alkyl, $C_1$-$C_4$-Perfluoralkyl, Phenyl oder Benzyl bedeuten; M für ein Alkalimetall und $M_1$ für ein Erdalkalimetall stehen; $R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten; X und $X_1$ unabhängig voneinander für -O-, -S-, -CO-, -SO- oder -$SO_2$- stehen; $R_6$, $R_7$ und $R_8$ unabhängig voneinander $C_1$-$C_4$-Alkyl, $C_1$-$C_4$-Perfluoralkyl, Phenyl oder Benzyl darstellen; und $Q_2$ Wasserstoff bedeutet.

Insbesondere eignet sich das erfindungsgemäße Verfahren zur Polymerisation von Norbornen und Norbornenderivaten. Von diesen Norbornenderivaten sind diejenigen besonders bevorzugt, die entweder der Formel II

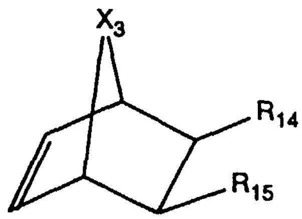

(II),

worin

| | |
|---|---|
| $X_3$ | -$CHR_{16}$-, Sauerstoff oder Schwefel; |
| $R_{14}$ und $R_{15}$ | unabhängig voneinander Wasserstoff, -CN, Trifluormethyl, $(CH_3)_3Si$-O-, $(CH_3)_3Si$- oder -$COOR_{17}$; und |
| $R_{16}$ und $R_{17}$ | unabhängig voneinander Wasserstoff, $C_1$-$C_{12}$-Alkyl, Phenyl oder Benzyl bedeuten; |

oder der Formel III

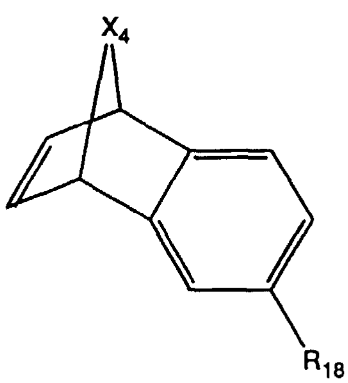

(III)

worin

| | |
|---|---|
| $X_4$ | -$CHR_{19}$-, Sauerstoff oder Schwefel; |
| $R_{19}$ | Wasserstoff, $C_1$-$C_{12}$-Alkyl, Phenyl oder Benzyl; und |
| $R_{18}$ | Wasserstoff, $C_1$-$C_6$-Alkyl oder Halogen bedeuten; |

oder der Formel IV

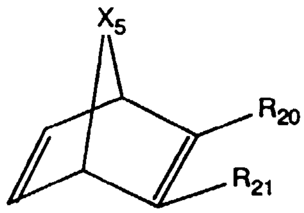

(IV),

worin

| | |
|---|---|
| $X_5$ | $-CHR_{22}-$, Sauerstoff oder Schwefel; |
| $R_{22}$ | Wasserstoff, $C_1$-$C_{12}$-Alkyl, Phenyl oder Benzyl; |
| $R_{20}$ und $R_{21}$ | unabhängig voneinander Wasserstoff, CN, Trifluormethyl, $(CH_3)_3Si-O-$, $(CH_3)_3Si-$ oder $-COOR_{23}$; und |
| $R_{23}$ | Wasserstoff, $C_1$-$C_{12}$-Alkyl, Phenyl oder Benzyl bedeuten; |

oder der Formel V entsprechen,

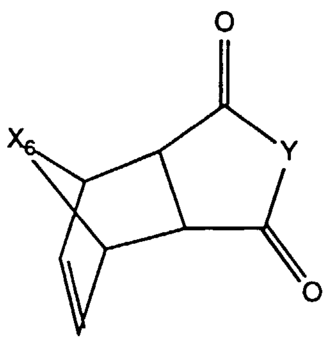

(V),

worin

| | |
|---|---|
| $X_6$ | $-CHR_{24}-$, Sauerstoff oder Schwefel; |
| $R_{24}$ | Wasserstoff, $C_1$-$C_{12}$-Alkyl, Phenyl oder Benzyl; |
| Y | Sauerstoff oder $>N-R_{25}$ ; und |
| $R_{25}$ | Wasserstoff, Methyl, Ethyl oder Phenyl bedeuten. |

Folgende Verbindungen der Formel I sind für das erfindungsgemäße Polymerisationsverfahren besonders gut geeignet, wobei bi- und polycyclische Systeme durch Diels-Alder-Reaktionen zugänglich sind:

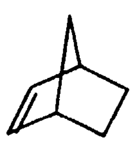 (1), 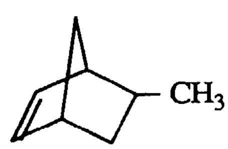 (2), 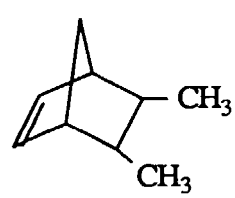 (3),

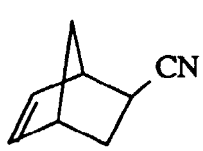 (4), 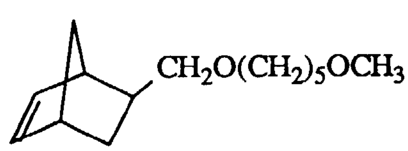 (5),

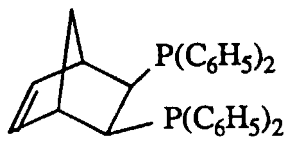 (6), 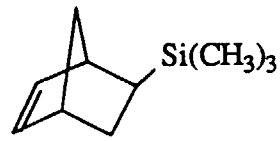 (7),

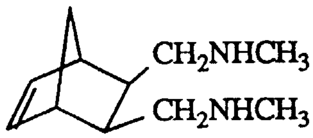 (8), 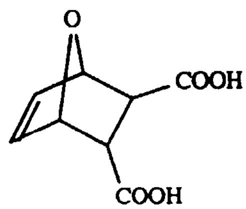 (9),

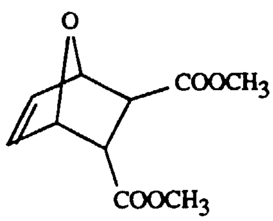 (10), 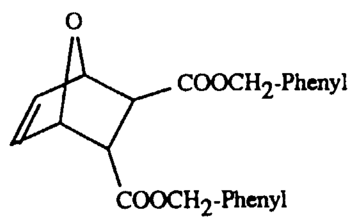 (11),

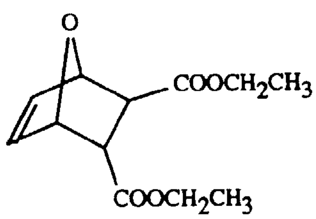 (12), 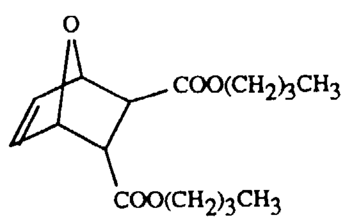 (13),

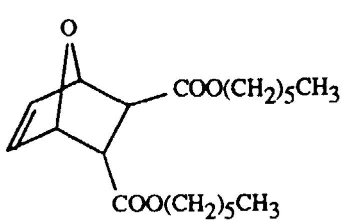 (14), 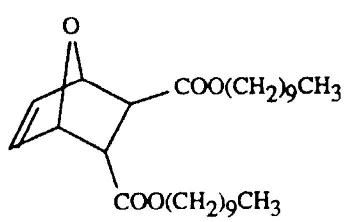 (15),

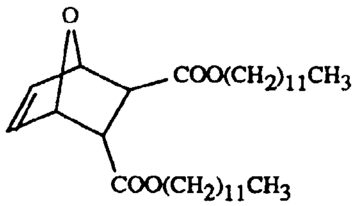 (16), 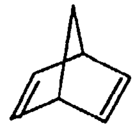 (17),

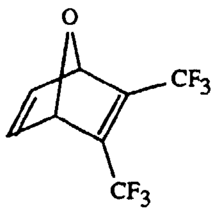 (18), 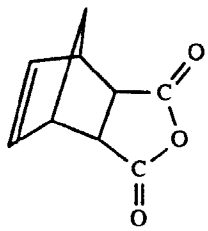 (19), 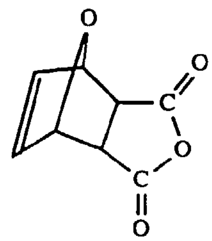 (20),

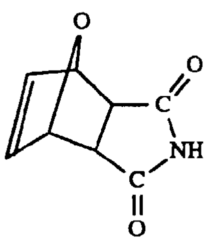 (21), 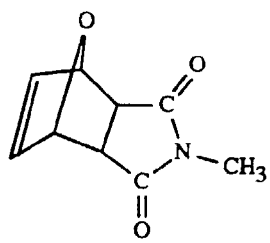 (22),

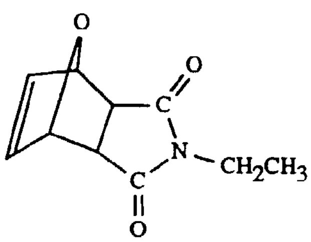 (23), 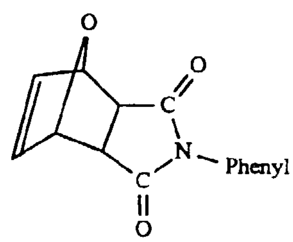 (24),

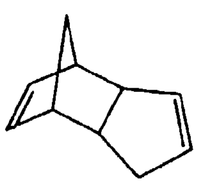 (25), 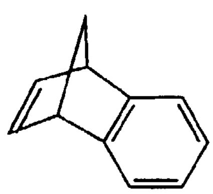 (26), 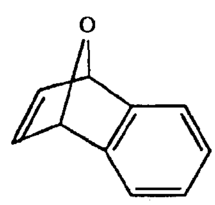 (27),

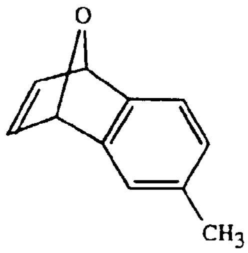 (28), 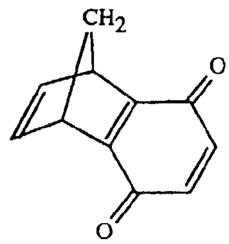 (29), 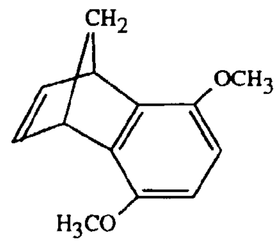 (30),

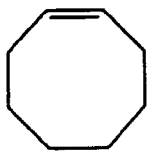 (31), 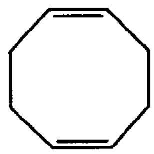 (32), 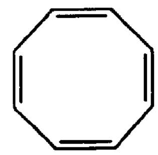 (33),

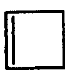 (34), 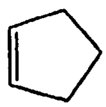 (35), 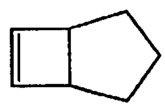 (36),

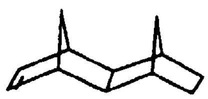 (37), 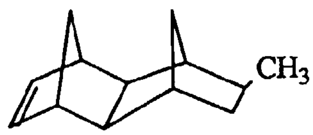 (38),

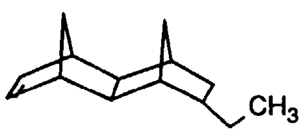 (39), 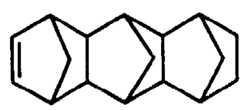 (40),

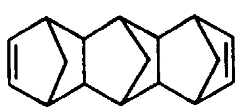 (41), 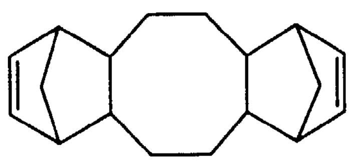 (42),

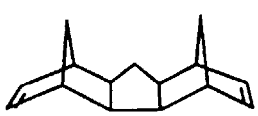 (43), 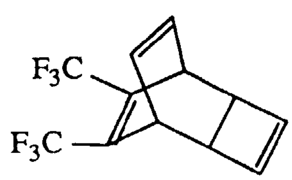 (44),

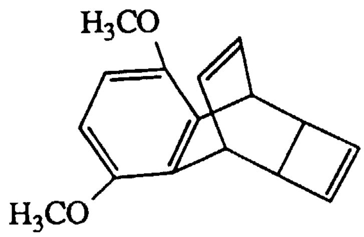

(45),

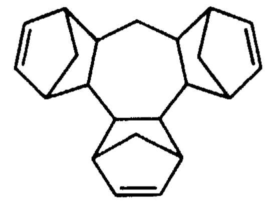

(46),

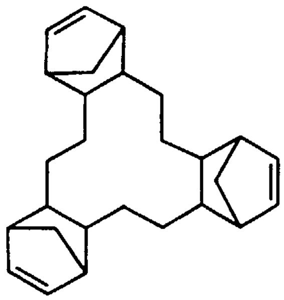

(47) und

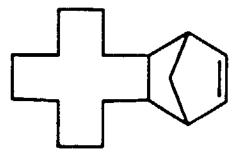

(48).

Erfindungsgemäss besonders bevorzugt werden Monomere und Comonomere verwendet, die nur Kohlenstoff und Wasserstoff enthalten.

Die comonomeren Cycloolefine können in einer Menge von 0,01 bis 99 Gew.-%, bevorzugt 0,1 bis 95 Gew.-%, besonders bevorzugt 1 bis 90 Gew.-%, und insbesondere bevorzugt 5 bis 80 Gew.-% enthalten sein, bezogen auf die in der Zusammensetzung vorhandenen Monomeren. Ganz besonders bevorzugt ist Norbornen als Comonomer in Mengen von zum Beispiel 20 bis 60 Gew.-% enthalten.

Bei den erfindungsgemäss zu verwendenden Ruthenium- und Osmiumverbindungen kann ein Monophosphin ein-, zwei- oder dreimal, und ein Diphosphin einmal an das Metallatom gebunden sein. In den Ruthenium- und Osmiumkatalysatoren sind bevorzugt 1 bis 4, bevorzugter 1 bis 3 und besonders bevorzugt 2 Liganden gebunden. Die Phosphinliganden entsprechen bevorzugt den Formeln VI und VIa,

$$PR_{26}R_{27}R_{28} \quad (VI),$$

$$R_{26}R_{27}P\text{-}Z_1\text{-}PR_{26}R_{27} \quad (VIa),$$

worin $R_{26}$, $R_{27}$ und $R_{28}$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellt; die Reste $R_{26}$ und $R_{27}$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetra- oder Pentamethylendioxyl bedeuten, oder unsubstituiertes oder mit $C_1$-$C_6$-Alkyl, $C_1$-$C_6$-Halogenalkyl oder $C_1$-$C_6$-Alkoxy substituiertes und mit 1 oder 2 1,2-Phenylen kondensiertem Tetra- oder Pentamethylen, oder Tetra- oder Pentamethylendioxyl darstellen, oder unsubstituiertes oder mit $C_1$-$C_6$-Alkyl, $C_1$-$C_6$-Halogenalkyl oder $C_1$-$C_6$-Alkoxy substituiertes und in den 1,2- und 3,4-Stellungen mit 1,2-Phenylen kondensiertes Tetramethylendioxyl darstellen, und $R_{28}$ die zuvor angegebene Bedeutung hat; und
$Z_1$ lineares oder verzweigtes, unsubstituiertes oder mit $C_1$-$C_4$-Alkoxy substituiertes $C_2$-$C_{12}$-Alkylen, unsubstituiertes oder mit $C_1$-$C_4$-Alkyl oder $C_1$-$C_4$-Alkoxy substituiertes 1,2- oder 1,3-Cycloalkylen mit 4 bis 8 C-Atomen, oder unsubstituiertes oder mit $C_1$-$C_4$-Alkyl oder $C_1$-$C_4$-Alkoxy substituiertes 1,2- oder 1,3-Heterocycloalkylen mit 5 oder 6 Ringgliedern und einem Heteroatom aus der Gruppe O oder N bedeutet.

Bei den Resten $R_{26}$, $R_{27}$ und $R_{28}$ handelt es sich bevorzugt um gleiche Reste. Ferner sind sterisch anspruchsvolle Reste bevorzugt, zum Beispiel verzweigtes, besonders $\alpha$-verzweigtes Alkyl oder Alkoxy, oder cyclische Reste.

$R_{26}$, $R_{27}$ und $R_{28}$ können als Alkyl linear oder verzweigt sein und bevorzugt 1 bis 12, bevorzugter 1 bis 8, und besonders bevorzugt 1 bis 6 C-Atome enthalten. Beispiele für Alkyl sind Methyl, Ethyl, n- und i-Propyl, n-, i- und t-Butyl, die Isomeren von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl und Eicosyl. Bevorzugte Beispiele sind Methyl, Ethyl, n-und i-Propyl, n-, i- und t-Butyl, 1-, 2- oder 3-Pentyl und 1-, 2-, 3- oder 4-Hexyl.

$R_{26}$, $R_{27}$ und $R_{28}$ können als Alkoxy linear oder verzweigt sein und bevorzugt 1 bis 12, bevorzugter 1 bis 8, und besonders bevorzugt 1 bis 6 C-Atome enthalten. Beispiele für Alkoxy sind Methoxy, Ethoxy, n- und i-Propyloxy, n-, i- und t-Butyloxy, die Isomeren von Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy und Eicosyloxy. Bevorzugte Beispiele sind Methoxy, Ethoxy, n- und i-Propyloxy, n-, i- und t-Butyloxy, 1-, 2- oder 3-Pentyloxy und 1-, 2-, 3- oder 4-Hexyloxy.

Sofern $R_{26}$, $R_{27}$ und $R_{28}$ substituiert sind, handelt es bei den Substituenten bevorzugt um $C_1$-$C_4$-Alkyl, $C_1$-$C_4$-Halogenalkyl oder $C_1$-$C_4$-Alkoxy. Halogen bedeutet bevorzugt Cl und besonders bevorzugt F. Beispiele für bevorzugte Substituenten sind Methyl, Methoxy, Ethyl, Ethoxy und Trifluormethyl. $R_{26}$, $R_{27}$ und $R_{28}$ sind bevorzugt ein- bis dreifach substituiert.

Bedeuten $R_{26}$, $R_{27}$ und $R_{28}$ Cycloalkyl, so handelt es sich bevorzugt um $C_5$-$C_8$-Cycloalkyl, und besonders bevorzugt um $C_5$- oder $C_6$-Cycloalkyl. Einige Beispiele sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyl und -cyclohexyl.

Bedeuten $R_{26}$, $R_{27}$ und $R_{28}$ Cycloalkyloxy, so handelt es sich bevorzugt um $C_5$-$C_8$-Cycloalkyloxy, und besonders bevorzugt um $C_5$- oder $C_6$-Cycloalkyloxy. Einige Beispiele sind Cyclobutyloxy, Cycloheptyloxy, Cyclooctyloxy und besonders Cyclopentyloxy und Cyclohexyloxy. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyloxy und -cyclohexyloxy.

Bedeuten $R_{26}$, $R_{27}$ und $R_{28}$ Aryl, so handelt es sich bevorzugt um $C_6$-$C_{12}$-Aryl und besonders bevorzugt um Phenyl oder Naphthyl. Beispiele für substituiertes Aryl sind Methyl-, Dimethyl-, Trimethyl-, Methoxy-, Dimethoxy-, Trimethoxy-, Trifluormethyl-, Bistrifluormethyl- und Tristrifluormethylphenyl.

Bedeuten $R_{26}$, $R_{27}$ und $R_{28}$ Aryloxy, so handelt es sich bevorzugt um $C_6$-$C_{12}$-Aryloxy und besonders bevorzugt um unsubstituiertes oder substituiertes Phenyloxy oder Naphthyloxy. Beispiele für substituiertes Aryloxy sind Methyl-, Dimethyl-, Trimethyl-, Methylisopropyl-, Isopropyl-, Diisopropyl-, Triisopropyl-, Tertiärbutyl-, Methyltertiärbutyl-, Ditertiärbutyl-, Tritertiärbutyl-, Methoxy-, Dimethoxy-, Trimethoxy-, Trifluormethyl-, Bistrifluormethyl- und Tristrifluormethylphenyloxy.

Bedeuten $R_{26}$, $R_{27}$ und $R_{28}$ Aralkyl, so handelt es sich bevorzugt um $C_7$-$C_{13}$-Aralkyl, wobei die Alkylengruppe im Aralkyl bevorzugt Methylen darstellt. Besonders bevorzugt stellt das Aralkyl Benzyl dar. Beispiele für substituiertes Aralkyl sind Methyl-, Dimethyl-, Trimethyl-, Methoxy-, Dimethoxy-, Trimethoxy-, Trifluormethyl-, Bistrifluormethyl- und Tristrifluormethylbenzyl.

Bedeuten $R_{26}$, $R_{27}$ und $R_{28}$ Aralkyloxy, so handelt es sich bevorzugt um unsubstituiertes oder substituiertes $C_7$-$C_{13}$-Aralkyloxy, wobei die Alkylengruppe im Aralkyloxy bevorzugt Methylen darstellt. Besonders bevorzugt stellt das Aralkyloxy unsubstituiertes oder substituiertes Benzyloxy dar. Beispiele für substituiertes Aralkyloxy sind Methyl-, Dimethyl-, Trimethyl-, Methoxy-, Dimethoxy-, Trimethoxy-, Trifluormethyl-, Bistrifluormethyl- und Tristrifluormethylbenzyloxy.

Beispiele für an das P-Atom gebundenes, gegebenenfalls substituiertes beziehungsweise kondensiertes Tetra- und Pentamethylen sind

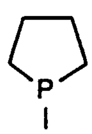 , 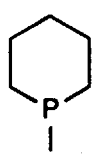 , 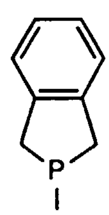 , 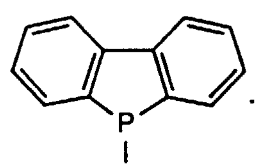 .

Andere geeignete Phosphine sind mit einer -PRa-Gruppe überbrückte Cycloaliphate mit 6 bis 8 Ringkohlenstoffatomen, zum Beispiel

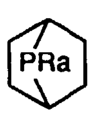 , 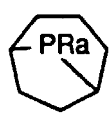 , 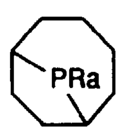 und 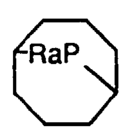 ,

worin Ra $C_1$-$C_6$-Alkyl, Cyclohexyl, Benzyl, unsubstituiertes oder mit 1 oder 2 $C_1$-$C_4$-Alkyl substituiertes Phenyl bedeutet.

Bei $Z_1$ als linearem oder verzweigtem Alkylen handelt es sich bevorzugt um 1,2-Alkylen oder 1,3-Alkylen mit vorzugsweise 2 bis 6 C-Atomen, zum Beispiel um Ethylen, 1,2-Propylen oder 1,2-Butylen.

Beispiele für $Z_1$ als Cycloalkylen sind 1,2- und 1,3-Cyclopentylen und 1,2- oder 1,3-Cyclohexylen. Beispiele für $Z_1$ als Heterocycloalkylen sind 1,2- und 1,3-Pyrrolidin, 1,2- und 1,3-Piperidin, und 1,2- und 1,3-Tetrahydrofuran.

In einer bevorzugten Ausführungsform entsprechen die Phosphinliganden der Formel VI, worin $R_{26}$, $R_{27}$ und $R_{28}$ unabhängig voneinander H, $C_1$-$C_6$-Alkyl, unsubstituiertes oder mit $C_1$-$C_4$-Alkyl substituiertes Cyclopentyl oder Cyclohexyl, oder unsubstituiertes oder mit $C_1$-$C_4$-Alkyl, $C_1$-$C_4$-Alkyl $C_1$-$C_4$-Alkoxy oder Trifluormethyl substituiertes Phenyl oder Phenyl oder unsubstituiertes oder mit $C_1$-$C_4$-Alkyl, $C_1$-$C_4$-Alkoxy oder Trifluormethyl substituiertes Benzyl darstellen. Besonders bevorzugte Beispiele für Phosphinliganden der Formel VI sind $(C_6H_5)H_2P$, $(3\text{-}CH_3\text{-}6\text{-}t\text{-}C_4H_9\text{-}C_6H_3)_3P$, $(3\text{-}CH_3\text{-}6\text{-}t\text{-}C_4H_9\text{-}C_6H_3)_3P$, $PH_3$, $(2,6\text{-Di-}t\text{-}C_4H_9\text{-}C_6H_3)_3P$, $(2,3\text{-Di-}t\text{-}C_4H_9\text{-}C_6H_3)_3P$, $(2,4\text{-Di-}t\text{-}C_4H_9\text{-}C_6H_3)_3P$, $(2,4\text{-Di-}CH_3\text{-}C_6H_3)_3P$, $(2,6\text{-Di-}CH_3\text{-}C_6H_3)_3P$, $(2\text{-}CH_3\text{-}6\text{-}t\text{-}C_4H_9\text{-}C_6H_3)_3P$, $(CH_3)_3P$, $(2\text{-}i\text{-}C_3H_7\text{-}C_6H_4)_3P$, $(3\text{-}i\text{-}C_3H_7\text{-}C_6H_4)_3P$, $(4\text{-}i\text{-}C_3H_7\text{-}C_6H_4)_3P$, $(2\text{-}n\text{-}C_4H_9\text{-}C_6H_4)_3P$, $(3\text{-}n\text{-}C_4H_9\text{-}C_6H_4)_3P$, $(4\text{-}n\text{-}C_4H_9\text{-}C_6H_4)_3P$, $(2\text{-}i\text{-}C_4H_9\text{-}C_6H_4)_3P$, $(3\text{-}i\text{-}C_4H_9\text{-}C_6H_4)_3P$, $(4\text{-}i\text{-}C_4H_9\text{-}C_6H_4)_3P$, $(2\text{-}t\text{-}C_4H_9\text{-}C_6H_4)_3P$, $(3\text{-}t\text{-}C_4H_9\text{-}C_6H_4)_3P$, $(4\text{-}t\text{-}C_4H_9\text{-}C_6H_4)_3P$, $(4\text{-}C_2H_5\text{-}C_6H_4)_3P$, $(3\text{-}n\text{-}C_3H_7\text{-}C_6H_4)_3P$, $(2\text{-}n\text{-}C_3H_7\text{-}C_6H_4)_3P$, $(4\text{-}n\text{-}C_3H_7\text{-}C_6H_4)_3P$, $(C_2H_5)_2HP$, $(3\text{-}CH_3\text{-}C_6H_4)_3P$, $(4\text{-}CH_3\text{-}C_6H_4)_3P$, $(2\text{-}C_2H_5\text{-}C_6H_4)_3P$, $(3\text{-}C_2H_5\text{-}C_6H_4)_3P$, $(i\text{-}C_3H_7)H_2P$, $(n\text{-}C_4H_9)H_2P$, $(C_6H_5CH_2)_2HP$, $(C_6H_5CH_2)H_2P$, $(2\text{-}CH_3\text{-}C_6H_4)_3P$, $(C_6H_5)_3P$, $(C_5H_{11})H_2P$, $(C_6H_5CH_2)_3P$, $(n\text{-}C_3H_7)_2HP$, $(1\text{-}C_3H_7)_2HP$, $(n\text{-}C_4H_9)_2HP$, $(n\text{-}C_3H_7)H_2P$, $(C_2H_5)H_2P$, $(C_5H_{11})_3P$, $(C_6H_5)_2HP$, $(C_5H_{11})_2HP$, $(n\text{-}C_3H_7)_3P$, $(i\text{-}C_3H_7)_3P$, $(n\text{-}C_4H_9)_3P$, $(CH_3)_2HP$, $(C_2H_5)_3P$, $(C_6H_{11})_3P$, $(C_6H_{11})_2HP$, $(C_5H_9)_3P$, $(C_5H_9)_2HP$ und $(CH_3)H_2P$.

In einer anderen bevorzugten Ausführungsform entsprechen die Phosphinliganden der Formel VI, worin $R_{26}$, $R_{27}$ und $R_{28}$ unabhängig voneinander H, $C_1$-$C_6$-Alkoxy, unsubstituiertes oder mit $C_1$-$C_4$-Alkyl substituiertes Cyclopentyloxy oder Cyclohexyloxy, oder unsubstituiertes oder mit $C_1$-$C_4$-Alkyl, $C_1$-$C_4$-Alkoxy oder Trifluormethyl substituiertes Phenyloxy oder Phenyl oder unsubstituiertes oder mit $C_1$-$C_4$-Alkyl, $C_1$-$C_4$-Alkyl, $C_1$-$C_4$-Alkoxy oder Trifluormethyl substituiertes Benzyloxy darstellen.

Beispiele für Phosphite sind $(CH_3O)_3P$, $(C_2H_5O)_3P$, $(n\text{-}C_3H_7O)_3P$, $(i\text{-}C_3H_7O)_3P$, $(n\text{-}C_4H_9O)_3P$, $(i\text{-}C_4H_9O)_3P$, $(t\text{-}C_4H_9O)_3P$, $(C_6H_5O)_3P$, $(2,4\text{-Di-}CH_3\text{-}C_6H_3O)_3P$, $(2,6\text{-Di-}CH_3\text{-}C_6H_3O)_3P$, $(2\text{-}C_2H_5\text{-}C_6H_4O)_3P$, $(3\text{-}C_2H_5\text{-}C_6H_4O)_3P$, $(4\text{-}C_2H_5\text{-}C_6H_4O)_3P$, $(2\text{-}n\text{-}C_3H_7\text{-}C_6H_4O)_3P$, $(3\text{-}n\text{-}C_3H_7\text{-}C_6H_4O)_3P$, $(4\text{-}n\text{-}C_3H_7\text{-}C_6H_4O)_3P$, $(2\text{-}i\text{-}C_3H_7\text{-}C_6H_4O)_3P$, $(3\text{-}i\text{-}C_3H_7\text{-}C_6H_4O)_3P$, $(4\text{-}i\text{-}C_3H_7\text{-}C_6H_4O)_3P$, $(2\text{-}n\text{-}C_4H_9\text{-}C_6H_4O)_3P$, $(3\text{-}n\text{-}C_4H_9\text{-}C_6H_4O)_3P$, $(4\text{-}n\text{-}C_4H_9\text{-}C_6H_4O)_3P$, $(2\text{-}i\text{-}C_4H_9\text{-}C_6H_4O)_3P$, $(3\text{-}i\text{-}C_4H_9\text{-}C_6H_4O)_3P$, $(4\text{-}i\text{-}C_4H_9\text{-}C_6H_4O)_3P$, $(2\text{-}t\text{-}C_4H_9\text{-}C_6H_4O)_3P$, $(3\text{-}t\text{-}C_4H_9\text{-}C_6H_4O)_3P$, $(4\text{-}t\text{-}C_4H_9\text{-}C_6H_4O)_3P$, $(2\text{-}CH_3\text{-}C_6H_4O)_3P$, $(3\text{-}CH_3\text{-}C_6H_4O)_3P$, $(2\text{-}CH_3\text{-}6\text{-}t\text{-}C_4H_9\text{-}C_6H_3O)_3P$, $(3\text{-}CH_3\text{-}6\text{-}t\text{-}C_4H_9\text{-}C_6H_3O)_3P$, $(3\text{-}CH_3\text{-}6\text{-}t\text{-}C_4H_9\text{-}C_6H_3O)_3P$, $(2,6\text{-Di-}t\text{-}C_4H_9\text{-}C_6H_3O)_3P$, $(2,3\text{-Di-}t\text{-}C_4H_9\text{-}C_6H_3O)_3P$, $(2,4\text{-Di-}t\text{-}C_4H_9\text{-}C_6H_3O)_3P$, $(4\text{-}CH_3\text{-}C_6H_4O)_3P$, und Phosphite der Formel

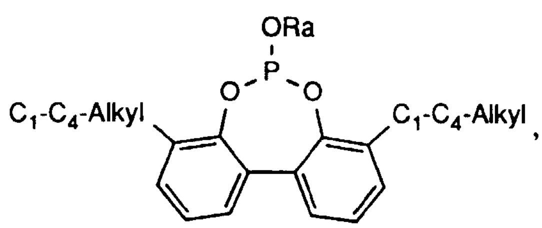

worin Ra $C_1$-$C_6$-Alkyl, Cyclohexyl, Benzyl, unsubstituiertes oder mit 1 oder 2 $C_1$-$C_4$-Alkyl substituiertes Phenyl bedeutet.

Besonders bevorzugte Phosphine sind Tri-i-propylphosphin, Tri-t-butylphosphin, Tricyclopentyl- und Tricyclohexylphosphin.

Als Liganden für die erfindungsgemäss zu verwendenden Ruthenium- und Osmiumverbindungen werden organische oder anorganische Verbindungen, Atome oder Ionen bezeichnet, die an ein Metallzentrum koordiniert sind

Im Rahmen der vorliegenden Erfindung besonders vorteilhaft verwendete Liganden sind beispielsweise ausgewählt aus einer Gruppe von Liganden (A) bestehend aus Stickstoff ($N_2$); unsubstituierten oder mit OH, $C_1$-$C_4$-Alkyl, $C_1$-$C_4$-Alkoxy, $C_6$-$C_{12}$-Aryl oder Halogen substituierten monocyclischen, polycyclischen oder kondensierten Arenen mit 6 bis 24, bevorzugt 6 bis 18 und besonders bevorzugt 6 bis 12 C-Atomen; unsubstituierten oder mit $C_1$-$C_4$-Alkyl, $C_1$-$C_4$-Alkoxy oder Halogen substituierten monocyclischen Heteroarenen; kondensierten Heteroarenen; kondensierten Aren-Heteroarenen mit 3 bis 22, bevorzugt 4 bis 16 und besonders 4 bis 10 C-Atomen und 1 bis 3 Heteroatomen ausgewählt aus der Gruppe O, S und N; und unsubstituierten oder mit $C_1$-$C_4$-Alkyl, $C_1$-$C_4$-Alkoxy oder Halogen sub-

stituierten aliphatischen, cycloaliphatischen, aromatischen oder araliphatischen Nitrilen mit 1 bis 22, bevorzugt 1 bis 18, besonders bevorzugt 1 bis 12 und ganz besonders bevorzugt 1 bis 7 C-Atomen. Die bevorzugten Substituenten sind Methyl, Ethyl, Methoxy, Ethoxy, Fluor, Chlor und Brom. Die Arene und Heteroarene sind bevorzugt mit ein bis drei Resten substituiert. Unter den Heteroarenen sind die elektronenreichen Heteroarene bevorzugt.

Einige Beispiele für Arene und Heteroarene sind Benzol, Cumen, Biphenyl, Naphthalin, Anthracen, Acenaphthen, Fluoren, Phenanthren, Pyren, Chrysen, Fluoranthren, Furan, Thiophen, Pyrrol, Pyridin, $\gamma$-Pyran, $\gamma$-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugte Arene und Heteroarene sind unsubstituiertes oder substituiertes Benzol, Naphthalin, Cumen, Thiophen und Benzthiophen. Ganz besonders bevorzugt ist das Aren Benzol oder ein mit 1 bis 3 $C_1$-$C_4$-Alkyl substituiertes Benzol wie zum Beispiel Toluol, Xylol, Trimethylbenzol, Isopropylbenzol, Tertiärbutylbenzol oder Cumen. Das Heteroaren ist bevorzugt Thiophen.

Die Nitrile können zum Beispiel mit Methoxy, Ethoxy, Fluor oder Chlor substituiert sein; bevorzugt sind die Nitrile unsubstituiert. Die Alkylnitrile sind bevorzugt linear. Einige Beispiele für Nitrile sind Acetonitril, Propionitril, Butyronitril, Pentylnitril, Hexylnitril, Cyclopentyl- und Cyclohexylnitril, Benzonitril, Methylbenzonitril, Benzylnitril und Naphthylnitril. Bei den Nitrilen handelt es sich bevorzugt um lineare $C_1$-$C_4$-Alkylnitrile oder Benzonitril. Von den Alkylnitrilen ist Acetonitril besonders bevorzugt.

In einer bevorzugten Untergruppe handelt es sich bei den Liganden der Gruppe (A) um $N_2$, unsubstituiertes oder mit ein bis drei $C_1$-$C_4$-Alkyl substituiertes Benzol, Thiophen, Benzonitril oder Acetonitril.

Gegebenenfalls sind weitere Liganden vorhanden, beispielsweise ausgewählt aus der Gruppe von Liganden (B) bestehend aus die Heteroatome O, S oder N enthaltenden und solvatisierenden anorganischen und organischen Verbindungen, die häufig auch als Lösungsmittel verwendet werden; und unsubstituiertem oder mit $C_1$-$C_4$-Alkyl, $C_1$-$C_4$-Alkoxy, $(C_1$-$C_4$-$Alkyl)_3Si$ oder $(C_1$-$C_4$-$Alkyl)_3SiO$- substituiertem Cyclopentadienyl oder Indenyl. Beispiele für solche Verbindungen sind $H_2O$, $H_2S$, $NH_3$; gegebenenfalls halogenierte, besonders fluorierte oder chlorierte aliphatische oder cycloaliphatische Alkohole oder Merkaptane mit 1 bis 18, bevorzugt 1 bis 12 und besonders bevorzugt 1 bis 6 C-Atomen, aromatische Alkohole oder Thiole mit 6 bis 18, bevorzugt 6 bis 12 C-Atomen, araliphatische Alkohole oder Thiole mit 7 bis 18, bevorzugt 7 bis 12 C-Atomen; offenkettige oder cyclische und aliphatische, araliphatische oder aromatische Ether, Thioether, Sulfoxide, Sulfone, Ketone, Aldehyde, Carbonsäureester, Lactone, gegebenenfalls N-$C_1$-$C_4$-mono- oder -dialkylierte Carbonsäureamide mit 2 bis 20, bevorzugt 2 bis 12 und besonders 2 bis 6 C-Atomen, und gegebenenfalls N-$C_1$-$C_4$-alkylierte Lactame; offenkettige oder cyclische und aliphatische, araliphatische oder aromatische, primäre, sekundäre und tertiäre Amine mit ein bis 20, bevorzugt 1 bis 12 und besonders bevorzugt 1 bis 6 C-Atomen; und Cyclopentadienyle wie zum Beispiel Cyclopentadienyl, Indenyl, ein- oder mehrfach methylierte oder trimethylsilylierte Cyclopentadienyle oder Indenyle. Beispiele sind auch Allyl, Metallyl und Crotyl.

Weitere Beispiele für die Gruppe von Liganden (B) sind Methanol, Ethanol, n- und i-Propanol, n-, i- und t-Butanol, 1,1,1-Trifluorethanol, Bistrifluormethylmethanol, Tristrifluormethylmethanol, Pentanol, Hexanol, Methyl- oder Ethylmerkaptan, Cyclopentanol, Cyclohexanol, Cyclohexylmerkaptan, Phenol, Methylphenol, Fluorphenol, Phenylmerkaptan, Benzylmerkaptan, Benzylalkohol, Diethylether, Dimethylether, Diisopropylether, Di-n- oder Di-t-butylether, Tetrahydrofuran, Tetrahydropyran, Dioxan, Diethylthioether, Tetrahydrothiophen, Dimethylsulfoxid, Diethylsulfoxid, Tetra- und Pentamethylensulfoxid, Dimethylsulfon, Diethylsulfon, Tetra- und Pentamethylensulfon, Aceton, Methylethylketon, Diethylketon, Phenylmethylketon, Methylisobutylketon, Benzylmethylketon, Acetaldehyd, Propionaldehyd, Trifluoracetaldehyd, Benzaldehyd, Essigsäureethylester, Butyrolacton, Dimethylformamid, Dimethylacetamid, Pyrrolidon und N-Methylpyrrolidon, Indenyl, Cyclopentadienyl, Methyl- oder Dimethyl- oder Pentamethylcyclopentadienyl und Trimethylsilylcyclopentadienyl.

Die primären Amine können der Formel $R_{29}NH_2$, die sekundären Amine der Formel $R_{29}R_{30}NH$ und die tertiären Amine der Formel $R_{29}R_{30}R_{31}N$ entsprechen, worin $R_{29}$ $C_1$-$C_{18}$-Alkyl, unsubstituiertes oder mit $C_1$-$C_4$-Alkyl oder $C_1$-$C_4$-Alkoxy substituiertes $C_5$-oder $C_6$-Cycloalkyl, oder unsubstituiertes oder mit $C_1$-$C_4$-Alkyl oder $C_1$-$C_4$-Alkoxy substituiertes $C_6$-$C_{18}$-Aryl oder $C_7$-$C_{12}$-Aralkyl darstellt, $R_{30}$ unabhängig die Bedeutung von $R_{29}$ hat oder $R_{29}$ und $R_{30}$ gemeinsam Tetramethylen, Pentamethylen, 3-Oxa-1,5-pentylen oder $-CH_2-CH_2-NH-CH_2-CH_2-$ oder $-CH_2-CH_2-N(C_1$-$C_4$-$Alkyl)-CH_2-CH_2-$ bedeuten, und $R_{31}$ unabhängig die Bedeutung von $R_{29}$ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methylethyl-, Dimethyl-ethyl, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin.

In einer bevorzugten Untergruppe handelt es sich bei den Liganden der Gruppe (B) um $H_2O$, $NH_3$, unsubstituierte oder teilweise oder vollständig fluorierte $C_1$-$C_4$-Alkanole oder um Cyclopentadienyl, Indenyl, Allyl, Metallyl oder Crotyl. Ganz besonders bevorzugt sind $H_2O$, $NH_3$, Cyclopentadienyl, Indenyl, Methanol und Ethanol.

In einer bevorzugten Ausführungsform enthalten die erfindungsgemäss zu verwendenden Ru- und Os-Katalysatoren Arene oder Heteroarene als Liganden, Phosphingruppen und Anionen zum Ladungsausgleich. Ganz besonders bevorzugt enthalten sie eine Arengruppe als Ligand, eine tertiäre Phosphingruppe und ein- oder zweiwertige Anionen zum Ladungsausgleich.

Geeignete Anionen von anorganischen oder organischen Säuren sind zum Beispiel Hydrid ($H^{\ominus}$), Halogenid (zum Beispiel $F^{\ominus}$, $Cl^{\ominus}$, $Br^{\ominus}$ und $I^{\ominus}$), das Anion einer Sauerstoffsäure, und $BF_4^{\ominus}$ , $PF_6^{\ominus}$, $SbF_6^{\ominus}$ oder $AsF_6^{\ominus}$. Es ist zu erwähnen, dass die zuvor erwähnten Liganden Cyclopentadienyl, Indenyl, Allyl, Metallyl und Crotyl anionisch sind und so auch dem Ladungsausgleich dienen.

Weitere geeignete Anionen sind $C_1$-$C_{12}$-, bevorzugt $C_1$-$C_6$- und besonders bevorzugt $C_1$-$C_4$-Alkoholate, die insbesondere verzweigt sind, zum Beispiel der Formel $R_xR_yR_zC$-$O^{\ominus}$ entsprechen, worin $R_x$ H oder $C_1$-$C_{10}$-Alkyl, $R_y$ $C_1$-$C_{10}$-Alkyl und $R_z$ $C_1$-$C_{10}$-Alkyl oder Phenyl darstellen, und die Summe der C-Atome von $R_x$,$R_y$ und $R_z$ 11 beträgt. Beispiele sind besonders i-Propyloxy und t-Butyloxy.

Andere geeignete Anionen sind $C_3$-$C_{18}$-, bevorzugt $C_5$-$C_{14}$- und besonders bevorzugt $C_5$-$C_{12}$-Acetylide, die der Formel $R_w$-$C{\equiv}C^{\ominus}$ entsprechen können, worin $R_w$ $C_1$-$C_{16}$-Alkyl, bevorzugt $\alpha$-verzweigtes $C_3$-$C_{12}$-Alkyl, zum Beispiel Formel $R_xR_yR_zC$-, bedeutet, oder unsubstituiertes oder mit ein bis 3 $C_1$-$C_4$-Alkyl oder $C_1$-$C_4$-Alkoxy substiuiertes Phenyl oder Benzyl darstellen. Einige Beispiele sind i-Propyl-, i- und t-Butyl-, Phenyl-, Benzyl-, 2-Methyl-, 2,6-Dimethyl-, 2-i-Propyl-, 2-i-Propyl-6-methyl-, 2-t-Butyl-, 2,6-Di-t-butyl- und 2-Methyl-6-t-butylphenylacetylid.

Bei den Anionen von Sauerstoffsäuren kann es sich zum Beispiel um Sulfat, Phosphat, Perchlorat, Perbromat, Periodat, Antimonat, Arsenat, Nitrat, Carbonat, das Anion einer $C_1$-$C_8$-Carbonsäure wie zum Beispiel Formiat, Acetat, Propionat, Butyrat, Benzoat, Phenylacetat, Mono-, Di- oder Trichlor- oder -fluoracetat, Sulfonate wie zum Beispiel Methylsulfonat, Ethylsulfonat, Propylsulfonat, Butylsulfonat, Trifluormethylsulfonat (Triflat), gegebenenfalls mit $C_1$-$C_4$-Alkyl, $C_1$-$C_4$-Alkoxy oder Halogen, besonders Fluor, Chlor oder Brom substituiertes Phenylsulfonat oder Benzylsulfonat, wie zum Beispiel Tosylat, Mesylat, Brosylat, p-Methoxy- oder p-Ethoxyphenylsulfonat, Pentafluorphenylsulfonat oder 2,4,6-Triisopropylsulfonat, und Phosphonate wie zum Beispiel Methylphosphonat, Ethylphosphonat, Propylphosphonat, Butylphosphonat, Phenylphosphonat, p-Methylphenylphosphonat oder Benzylphosphonat handeln.

Besonders bevorzugt sind $H^{\ominus}$, $F^{\ominus}$, $Cl^{\ominus}$, $Br^{\ominus}$, $BF_4^{\ominus}$, $PF_6^{\ominus}$ , $SbF_6^{\ominus}$, $AsF_6^{\ominus}$, $CF_3SO_3^{\ominus}$, $C_6H_5$-$SO_3^{\ominus}$, 4-Methyl-$C_6H_5$-$SO_3^{\ominus}$, 3,5-Dimethyl-$C_6H_5$-$SO_3^{\ominus}$, 2,4,6-Trimethyl-$C_6H_5$-$SO_3^{\ominus}$ und 4-$CF_3$-$C_6H_5$-$SO_3^{\ominus}$ sowie Cyclopentadienyl ($Cp^{\ominus}$).

In einer bevorzugten Ausführungsform entsprechen die Ruthenium- und Osmiumverbindungen einer der Formeln VII bis VIId

$$R_{32}L_1Me^{2+}(Z^{n-})_{2/n} \quad \text{(VII),}$$

$$R_{32}L_1L_2Me^{2+}(Z^{n-})_{2/n} \quad \text{(VIIa),}$$

$$(R_{32})_2L_1Me^{2+}(Z^{n-})_{2/n} \quad \text{(VIIb),}$$

$$(R_{32})_3L_1Me^{2+}(Z^{n-})_{2/n} \quad \text{(VIIc),}$$

$$R_{32}(L_1)_2Me^{2+}(Z^{n-})_{2/n} \quad \text{(VIId),}$$

worin

$R_{32}$ ein Phosphinligand der Formel VI oder VIa ist;
Me für Ru oder Os steht;
n für die Zahlen 1, 2 oder 3 steht;
Z das Anion einer anorganischen oder organischen Säure ist;

(a) $L_1$ einen Liganden der Gruppe A, wobei die $L_1$ in Formel VIId gegebenenfalls verschieden sind, und
(b) $L_2$ einen Liganden der Gruppe B bedeuten.

Für $R_{32}$, $L_1$ und $L_2$ gelten die zuvor für die einzelnen Bedeutungen angegebenen Bevorzugungen.

In den Formeln VII bis VIId steht n bevorzugt für 1 oder 2 und ganz besonders 1. Für $R_{32}$ gelten die für die Phosphinliganden der Formeln VI und VIa angegebenen Bevorzugungen, insbesondere handelt es sich um tertiäre

Phosphine.

Ganz besonders bevorzugt werden im erfindungsgemässen Verfahren Ruthenium- oder Osmiumverbindungen einer der Formeln VIII bis VIIId verwendet,

$$(R_{26}R_{27}R_{28}P)L_1Me^{2+}(Z_1^{1-})Z_2^{-1} \quad \text{(VIII)},$$

$$(R_{26}R_{27}R_{28}P)_2L_1Me^{2+}(Z_1^{1-})Z_2^{-1} \quad \text{(VIIIa)},$$

$$(R_{26}R_{27}R_{28}P)L_1L_2Me^{2+}(Z_1^{1-})Z_2^{-1} \quad \text{(VIIIb)},$$

$$(R_{26}R_{27}R_{28}P)_3L_1Me^{2+}(Z_1^{1-})Z_2^{-1} \quad \text{(VIIIc)},$$

$$(R_{26}R_{27}R_{28}P)(L_1)_2Me^{2+}(Z_1^{1-})Z_2^{-1} \quad \text{(VIIId)},$$

worin

Me für Ru oder Os steht;

$Z_1$ und $Z_2$ unabhängig voneinander $H^{\ominus}$, Cyclopentadienyl, $Cl^{\ominus}$, $Br^{\ominus}$, $BF_4^{\ominus}$, $PF_6^{\ominus}$, $SbF_6^{\ominus}$, $AsF_6^{\ominus}$, $CF_3SO_3^{\ominus}$, $C_6H_5$-$SO_3^{\ominus}$, 4-Methyl-$C_6H_5$-$SO_3^{\ominus}$, 3,5-Dimethyl-$C_6H_5$-$SO_3^{\ominus}$, 2,4,6-Trimethyl-$C_6H_5$-$SO_3^{\ominus}$ oder 4-$CF_3$-$C_6H_5$-$SO_3^{\ominus}$ bedeuten;

$R_{26}$, $R_{27}$ und $R_{28}$ unabhängig voneinander $C_1$-$C_6$-Alkyl, unsubstituiertes oder mit 1 bis 3 $C_1$-$C_4$-Alkyl substituiertes Cyclopentyl oder Cyclohexyl oder Cyclopentyloxy oder Cyclohexyloxy, oder unsubstituiertes oder mit 1 bis 3 $C_1$-$C_4$-Alkyl substituiertes Phenyl oder Benzyl oder Phenyloxy oder Benzyloxy darstellen;

$L_1$ unsubstituiertes oder mit 1 bis 3 $C_1$-$C_4$-Alkyl, $C_1$-$C_4$-Alkoxy, -OH, -F oder Cl substituiertes $C_6$-$C_{16}$-Aren oder $C_5$-$C_{16}$-Heteroaren oder $C_1$-$C_6$-Alkyl-CN, Benzonitril oder Benzylnitril darstellt, wobei die $L_1$ in Formel VIIId gegebenenfalls verschieden sind; und

$L_2$ $H_2O$ oder $C_1$-$C_6$-Alkanol ist.

Wenn die Herstellung der Ruthenium- und Osmiumkatalysatoren in Lösungsmitteln vorgenommen wird, die an ein Metallatom koordinieren können, wie zum Beispiel Alkanolen, so können sich solvatierte Ru/Os-Kationkomplexe bilden, die im Rahmen der Verwendung gemäss der Erfindung mitumfasst werden.

Einige Beispiele für gemäss der Erfindung zu verwendende Ruthenium- und Osmiumverbindungen sind [Tos ist gleich Tosylat]: $(C_6H_{11})_2HPRu(p\text{-Cumen})Cl_2$, $(C_6H_{11})_3PRu(p\text{-Cumen})Cl_2$, $(C_6H_{11})_3PRu(p\text{-Cumen})(Tos)_2$, $(C_6H_{11})_3PRu(p\text{-Cumen})Br_2$, $(C_6H_{11})_3PRu(p\text{-Cumen})ClF$, $(C_6H_{11})_3PRu(C_6H_6)(Tos)_2$, $(C_6H_{11})_3PRu(CH_3\text{-}C_6H_5)(Tos)_2$, $(C_6H_{11})_3PRu(C_{10}H_8)Tos)_2$, $(i\text{-}C_3H_7)_3PRu(p\text{-Cumen})Cl_2$, $(CH_3)_3PRu(p\text{-Cumen})Cl_2$, $(C_6H_{11})_3PRu(CH_3\text{-}CN)(C_2H_5\text{-}OH)(Tos)_2$, $(C_6H_{11})_3PRu(p\text{-Cumen})(CH_3\text{-}CN)_2(PF_6)_2$, $(C_6H_{11})_3PRu(p\text{-Cumen})(CH_3\text{-}CN)_2(Tos)_2$, $(n\text{-}C_4H_9)_3PRu(p\text{-Cumen})(CH_3\text{-}CN)_2(Tos)_2$, $(C_6H_{11})_3PRu(CH_3CN)Cl_2$, $(C_6H_{11})_3PRu(CH_3\text{-}CN)_2Cl_2$, $(n\text{-}C_4H_9)_3PRu(p\text{-Cumen})Cl_2$, $(C_6H_{11})_3PRu(p\text{-Cumen})(C_2H_5OH)_2(BF_4)_2$, $(C_6H_{11})_3PRu(p\text{-Cumen})(C_2H_5OH)_2(PF_6)_2$, $(i\text{-}C_3H_7)_3POs(p\text{-Cumen})Cl_2$, $(CH_3)_3POs(p\text{-Cumen})Cl_2$, $(C_6H_5)_3POs(p\text{-Cumen})Cl_2$, $[(C_6H_{11})_3P]_3Ru(CH_3\text{-}CN)$, $(C_5H_9)_3PRu(p\text{-Cumen})Cl_2$, $(C_6H_{11})_3PRu(p\text{-Cumen})HCl$, $(C_6H_{11})_3PRu[1,2,4,5\text{-}(CH_3)_4C_6H_2]Cl_2$, $(C_6H_{11})_3PRu[1,3,5\text{-}(i\text{-}C_3H_7)_3C_6H_3]Cl_2$, $(C_6H_{11})_3PRU[(C_4H_9)\text{-}C_6H_5]Cl_2$, $(C_6H_{11})_3Pos(p\text{-Cumen})Cl_2$, $(C_6H_5)_3PRu(p\text{-Cumen})HCl$, $[(C_6H_{11})_3P]_2Ru(CH_3\text{-}CN)(Tos)_2$, $RuCl_2(p\text{-Cumen})[(C_6H_{11})_2PCH_2CH_2P(C_6H_{11})_2]$, $(C_6H_{11})_3PRu(p\text{-Cumen})(C_2H_5OH)(BF4)_2$, $(C_6H_{11})_3PRu(C_6H_6)(C_2H_5OH)_2(Tos)_2$, $(C_6H_{11})_3PRu(i\text{-}C_3H_7\text{-}C_6H_5)(Tos)_2$, $(C_6H_{11})_3PRu(C_6H_6)(p\text{-Cumen})Br_2$, $(C_6H_{11})_3PRu(Biphenyl)(Tos)_2$, $(C_6H_{11})_3PRu(Anthracen)(Tos)_2$, $(2\text{-}CH_3C_6H_4)_3POs(p\text{-Cumen})Cl_2$ und $(C_6H_{11})3PRu(Chrysen)(Tos)_2$.

Die erfindungsgemäss zu verwendenden Ruthenium- und Osmiumverbindungen sind bekannt oder nach bekannten und analogen Verfahren ausgehend von den Metallhalogeniden (zum Beispiel $MeX_3$ oder $[MeArenX_2]_2$ und Reaktion mit Phosphinen und Ligandenbildnern herstellbar.

Die erfindungsgemäße Zusammensetzung kann inerte Lösungsmittel enthalten. Ein besonderer Vorteil ist jener, daß bei flüssigen Monomeren eine Metathesepolymerisation ohne die Verwendung eines Lösungsmittels durchgeführt werden kann. Ein weiterer Vorteil ist, dass die Polymerisation selbst in Wasser, polaren und protischen Lösungsmitteln oder Wasser-/Lösungsmittel-Gemischen durchgeführt werden kann. In diesen Fällen ist es im Rahmen der vorliegenden Erfindung von Vorteil, ein Tensid zu verwenden.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Es ist besonders hervorzuheben, dass die erfindungsgemässe Zusammensetzung aus einem DCPD, gegebenenfalls einem Cycloolefin und Katalysator oft unempfindlich gegen Sauerstoff und Feuchtigkeit ist, was eine Lagerhaltung sowie Reaktionsausführung ohne Schutzgas ermöglicht.

Katalytische Mengen bedeutet im Rahmen der vorliegenden Erfindung bevorzugt eine Menge von 0,001 bis 20 Mol-%, besonders bevorzugt 0,01 bis 15 Mol-% und ganz besonders bevorzugt 0,01 bis 10 Mol-%, bezogen auf die Menge des Monomers. Auf Grund der hohen thermokatalytischen Aktivität sind Mengen von 0,001 bis 2 Mol.-% ganz besonders bevorzugt.

Die für die Polymerisation verwendete erfindungsgemässe Zusammensetzung kann direkt vor der Polymerisation hergestellt oder als vorformuliertes Gemisch verwendet werden, da die verwendeten Katalysatoren eine besonders hohe Stabilität aufweisen. Das Gemisch kann sogar vor der Polymerisation als gebrauchsfertige Formulierung längere Zeit gelagert werden, was für die grosstechnische Anwendung von Vorteil ist.

Die erfindungsgemässe Zusammensetzung kann Formulierungshilfstoffe enthalten. Bekannte Hilfsstoffe sind Antistatika, Antioxidantien, Lichtschutzmittel, Weichmacher, Farbstoffe, Pigmente, Füllstoffe, Verstärkerfüllstoffe, Gleitmittel, Haftvermittler, viskositätserhöhende Mittel und Entformungshilfsmittel. Die Hilfstoffe können in überraschend hohen Anteilen zugegen sein, ohne die Polymerisation nachteilig zu beeinflussen, zum Beispiel in Mengen von bis zu 70 Gew.-%, bevorzugt 1 bis 70 Gew.%, bevorzugter 5 bis 60 Gew.-%, besonders bevorzugt 10 bis 50 Gew.-% und insbesondere bevorzugt 10 bis 40 Gew.-%, bezogen auf die Zusammensetzung. Hilfstoffe zur Verbesserung der optischen, physikalischen, mechanischen und elektrischen Eigenschaften sind in grosser Vielzahl bekannt geworden. Einige Beispiele sind Glas und Quarz in Form von Pulvern, Kugeln und Fasern, Metall- und Halbmetalloxide, Carbonate wie $MgCO_3$, $CaCO_3$, Dolomit, Metallsulfate wie Gips und Schwerspat, natürliche und synthetische Silikate wie Talk, Zeolithe, Wollastonit, Feldspate, Tonerden wie Chinaclay, Gesteinsmehle, Whisker, Carbonfasern, Kunststofffasern oder -pulver und Russ. Viskositätserhöhende Mittel sind insbesondere Metathesepolymerisate, die olefinisch ungesättigte Gruppen aufweisen und bei der Polymerisation in das Polymer eingebaut werden können. Solche Metathesepolymerisate sind bekannt und zum Beispiel unter dem Handelsnamen Vestenamere® käuflich. Andere viskositätserhöhende Mittel sind Polybutadien, Polyisopren oder Polychlorbutadien, sowie Copolymere von Butadien, Isopren und Chloropren mit Olefinen.

Ein weiterer Gegenstand der Erfindung ist ein Verfahren zur Herstellung von Metathesepolymerisaten, das dadurch gekennzeichnet ist, dass man eine Zusammensetzung aus

(a) Dicyclopentadien alleine oder in Mischung mit einem gespannten Cycloolefin, und
(b) einer katalytischen Menge mindestens einer carbenfreien, zweiwertig-kationischen Ruthenium- oder Osmiumverbindung als Einkomponenten-Katalysator, die mindestens eine Phosphingruppe und insgesamt 2 bis 5 Liganden an das Metallatom gebunden enthält, und die Säureanionen zum Ladungsausgleich enthält, erwärmt.

Das erfindungsgemässe Verfahren wird bevorzugt bei einer Temperatur von mindestens 50°C und bevorzugter mindestens 60°C durchgeführt Insbesondere wird das erfindungsgemäße Verfahren bei Temperaturen von 60 bis 300°C, bevorzugt 60 bis 250°C, besonders bevorzugt 60 bis 200°C und insbesondere bevorzugt 70 bis 160°C durchgeführt. Nach der Polymerisation kann es vorteilhaft sein, die Polymeren bei erhöhten Temperaturen, zum Beispiel 80 bis 200°C, nachzutempern.

Zur Herstellung linearer Polymere wird die Reaktion bevorzugt in verdünnten Lösungen durchgeführt.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur spanabhebenden Herstellung von Formkörpern oder thermoplastisch verformbare Werkstoffe zur Herstellung von Formkörpern aller Art, und Beschichtungen hergestellt werden. Vorteilhaft werden Formgebung und Polymerisation in lösungsmittelfreien Reaktivsystemen verbunden, wobei Verarbeitungsverfahren wie zum Beispiel Spritzgiessen, Extrusion, Polymerisationen in vorgegebenen Formen (gegebenenfalls unter Druck) angewendet werden können.

Bei den nach dem erfindungsgemäss hergestellten Polymerisaten kann es sich um Homopolymere oder Copolymere mit statistischer Verteilung der Struktureinheiten, Pfropfpolymere oder um Blockpolymere handeln, sowie um vernetzte Polymere dieser Art Sie können ein mittleres Molekulargewicht ($\overline{Mw}$) von z. B. 500 bis zu 2 Millionen Dalton, vorzugsweise 1000 bis 1 Million Dalton (bestimmt nach GPC durch Vergleich mit engverteilten Polystyrolstandards) aufweisen.

Es wurde überraschend gefunden, dass die Polymerisation in einem Lösungsmittel in hohen Ausbeuten zu einem linearen Polydicyclopentadien führt, einem Polymer mit Strukturelementen der Formel IX

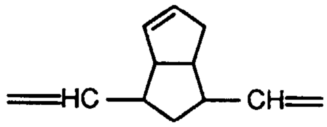

(IX).

Ein weiterer Gegenstand der Erfindung sind lineare Copolymere mit Strukturelementen der Formel IX und Sruukturelementen der Formel X,

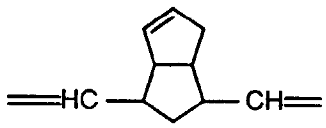

(IX),

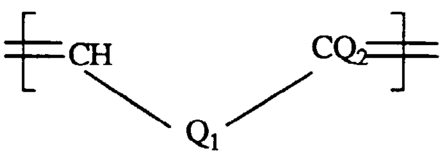

(X),

und vernetzte Copolymere insbesondere mit Strukturelementen der Formeln IX, X und XI,

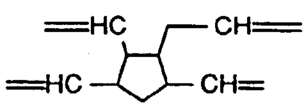

(XI),

worin

$Q_1$ und $Q_2$ die zuvor angegebenen Bedeutungen haben, einschliesslich der Bevorzugungen. Die unvernetzten beziehungsweise linearen Polymere umfassen Oligomere und Polymere und können zum Beispiel 5 bis 5000, vorteilhaft 10 bis 2000, bevorzugt 20 bis 1000, besonders bevorzugt 20 bis 500 und insbesondere bevorzugt 20 bis 300 Struktureinheiten enthalten. Werden die Polymere weiterverarbeitet, sind niedrigere Molekulargewichte bevorzugt, und bei Verarbeitung zu Formteilen verwendet man zweckmässig Polymere mit höheren Molekulargewichten.

Ein anderer Gegenstand der Erfindung sind Polymerisate, die durch das erfindungsgemässe Verfahren erhältlich sind.

Unter den Polymeren sind jene bevorzugt, die nur Kohlenstoff und Wasserstoff enthalten.

Je nach Art und Menge an verwendeten Monomeren können die erfindungsgemässen Polymere sehr verschiedene Eigenschaften aufweisen. Einige zeichnen sich durch sehr hohe Sauerstoffpermeabilität, hervorragende dielektrische Eigenschaften (tiefe Dielektrizitätskonstanten, niedrige Verlustfaktoren bzw. tanδ-Werte) gute Wärmestabilität (Glassumwandlungstemperaturen über 100°C), gute Zähigkeiten (Schlag- und Kerbschlagzähigkeit), Flexibilität

und mechanische Festigkeiten (Bruchfestigkeit), Härte und geringe Wasserabsorption aus. Andere haben hervorragende optische Eigenschaften wie zum Beispiel hohe Transparenz und niedrige Brechungsindices. Ferner sind insbesondere der geringe Schrumpf und die ausgezeichneten Oberflächeneigenschaften (Glätte, Glanz, Haftung) hervorzuheben. Daher können sie in sehr unterschiedlichen technischen Gebieten Verwendung finden.

Die erfindungsgemässen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit und die hohe Lösungsmittelbeständigkeit zu erwähnen. Die Oberflächen können weiter modifiziert, zum Beispiel lackiert oder bedruckt werden, wobei auch hier die hohen Haftfestigkeiten der Lacke zu erwähnen sind.

Die erfindungsgemäss erhältlichen Polymere eignen sich zur Herstellung von medizinischen Geräten, Implantaten oder Kontaktlinsen; zur Herstellung von elektrischen (Spulenverguss) und elektronischen Bauteilen; als Bindemittel für Lacke; als thermohärtbare Zusammensetzungen für den Modellbau oder als Klebstoffe zum Verkleben von Substraten mit niedrigen Oberflächenenergien (zum Beispiel Teflon, Polyethylen und Polypropylen), sowie als thermopolymerisierbare Zusammensetzung in der Stereolithographie. Die erfindungsgemäßen Zusammensetzungen können auch zur Herstellung von Lacken durch Thermopolymerisation verwendet werden, wobei einerseits klare (transparente) und sogar pigmentierte Zusammensetzungen verwendet werden können. Es können sowohl Weissals auch Buntpigmente verwendet werden. Ferner ist die Herstellung von Formkörpern nach thermoplastischen Formgebungsverfahren für Gebrauchsgegenstände aller Art zu erwähnen.

Die erfindungsgemässen Zusammensetzungen eignen sich besonders zur Herstellung von Schutzschichten. Ein weiterer Gegenstand der Erfindung ist eine Variante des erfindungsgemäßen Verfahrens zur Herstellung von beschichteten Materialien, bei dem man eine Zusammensetzung aus (a) Dicyclopentadien allein oder in Mischung mit einem gespannten Cycloolefin, (b) Katalysator und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation erwärmt. Mit diesem Verfahren können Oberflächen von Substraten modifiziert oder geschützt werden (Korrosionsschutz).

Ein weiterer Gegenstand der vorliegenden Erfindung ist ein Trägermaterial, das mit einem erfindungsgemäßem Oligomer oder Polymer beschichtet ist und das ein Vernetzungsmittel enthält. Diese Materialien eignen sich zur Herstellung von Schutzschichten oder Reliefabbildungen durch Erwärmung und anschließendem Entwickeln mit einem Lösungsmittel. Geeignete Vernetzungsmittel, die z.B. in einer Menge von 0,01 bis 20 Gew.% enthalten sein können, sind vor allem organische Bisazide, besonders das käufliche 2,6-Bis(4-azidobenzyliden)4-methyl-cyclohexanon.

Gegenstand der vorliegenden Erfindung ist ferner ein beschichtetes Trägermaterial, das dadurch gekennzeichnet ist, dass auf einem Substrat eine Schicht aus einer erfindungsgemässen Zusammensetzung aufgebracht ist.

Gegenstand der vorliegenden Erfindung ist ebenfalls ein beschichtetes Substrat mit einer gehärteten Schicht aus der erfindungsgemässen Zusammensetzung.

Geeignete Substrate (Trägermaterialien) sind beispielsweise solche aus Glas, Mineralien, Keramiken, Kunststoffen, Holz, Halbmetallen, Metallen, Metalloxiden und Metallnitriden. Die Schichtdicken richten sich im wesentlichen nach der gewünschten Verwendung und können z.B. 0,1 bis 1000 µm, bevorzugt 0,5 bis 500 µm, besonders bevorzugt 1 bis 100 µm betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Bei Beschichtungen werden oft besonders gute Resultate erzielt, wenn man zur thermischen Metathese-Polymerisation zusätzlich Cycloolefine verwendet, die zusätzlich 1 bis drei und bevorzugt eine weitere Doppelbindung enthalten und die im Rahmen der Erfindung polycyclische kondensierte Ringsysteme darstellen.

Die folgenden Beispiele erläutern die Erfindung weiter.

Beispiele 1 bis 12:

Dicyclopentadien (destilliert oder technisch) und gegebenenfalls ein Comonomeres (Zusatz) werden gemischt und (p-Cumen)$RuCl_2[P(C_6H_{11})_3]$ als Katalysator wird unter leichtem Erwärmen gelöst. Man gibt gegebenenfalls Vestenamer® oder Di-t-butyl-p-kresol (BHT) zu und entgast die Mischung im Vakuum bei 50-60°C. Die Mischung wird in Formen gegossen und thermisch gehärtet. Die Glasumwandlungstemperatur wird mit Differential Scanning Analyse bestimmt. Die Quellung in Toluol ist in Prozent der Gewichtsaufnahme an Toluol angegeben. Weitere Angaben befinden sich in Tabelle 1.

Tabelle 1

| Bsp. | DCPD | Zusatz | Katalysator | Härtung | $T_g$ | Quellung |
|---|---|---|---|---|---|---|
| 1 | dest. | | 0,5 | a,b,c | 119 | 105 |
| 2 | dest. 90 % | 10 2-N | 0,5 | a, b, c | 90 | 107 |
| 3 | dest. 50 % | 50 2-N | 0,5 | a, b, c | 70 | 156 |
| 4 | dest. 99 % | 1 BHT | 0,5 | a, b, c | 111 | 100 |
| 5 | dest. | | 0,3 | a, b, c | 120 | 102 |
| 6 | dest. 90.9 % | 9,1 PO | 0,5 | a, b, c | 11 | 128 |
| 7 | dest. 83 % | 17 PO | 0,5 | a, b, c, d | 125 | 170 |
| 8 | 95,2 % | 4,8 PN | 0,5 | a, b, c | 94 | 109 |
| 9 | 90 % | 10 2-N | 0,5 | a, b, c | 90 | 107 |
| 10 | 50 % | 50 2-N | 0,5 | a, b, c | 70 | 156 |
| 11 | n.dest. | | 0,5 | a, b, c | 110 | 76 |
| 12 | n.dest. | | 0,3 | a, b, c | 98 | 88 |
| 13 | n.dest. | | 0,3 | a, b, c, d | 110 | 70 |

n.dest.: nicht destilliert; Zusatz: Menge in %; BHT: Di-t-butyl-p-kresol; PO: Vestenamer®; PN: Polynorbornen; 2-N: 2-Norbornen; ND: Norbornadien; Katalysator: Menge (%) bezogen auf DCPD; Härtung: a: 1h/80°C; b: 1h/100°C; c: 2h/120°C; d: 2h/150°C; $T_g$: °C; Quellung: (%)

Beispiele 14 bis 21:

Es wird wie in Beispiel 1 verfahren und zusätzlich der in Tabelle 2 angegebene Füllstoff mitverwendet. Gehärtet wird 1h bei 80°C, gefolgt von 1h bei 100°C und 2h bei 120°C. Die Katalysatormenge beträgt 0,5 %, bezogen auf DCPD. Weitere Angaben befinden sich in Tabelle 2.

Tabelle 2:

| Bsp. | DCPD | Zusatz | Füllstoff | $T_g$ | Quellung |
|---|---|---|---|---|---|
| 14 | dest. 95% | | 5 Aerosil 380 ($SiO_2$) | --- | --- |
| 15 | dest. 57% | 3 PN | 40 $Al_2O_3$-Pulver | 92 | 52 |
| 16 | dest. 48,5% | 1,5 PN | 50 Aluminiumhydroxid | --- | -- |
| 17 | dest. 48,5% | 1,5 PN | 50 Talk | 103 | 52 |
| 18 | dest. 48,5% | 1,5 PN | 50 Aluminium Griess | 92 | 60 |
| 19 | dest. 30 % | 1,5 PN | 70 Quarzmehl K8 | 90 | 43 |
| 20 | n.dest. 25% | | 75 DT 082 | 101 | 42 |
| 21 | n.dest. 99,5% | | 0,5 Aerosil 350 | --- | --- |

n.dest: nicht destilliert; Zusatz: Menge in %; PN: Polynorbornen; Füllstoff: Menge (%); Aluminiumhydroxid: (DT 082); $T_g$: °C; Quellung: (%)

Beispiel 22:

190 g techn. Dicyclopentadien (Shell) und 950 mg $(C_6H_{11})_3PRu(p\text{-Cumen})Cl_2$ werden gemischt und 4h bei 90°C, gefolgt von 1h bei 120°C und anschliessend 4h bei 150°C erwärmt. Das erhaltene Polymer hat die folgenden Eigenschaften:

$T_g$: 119°C; Gewichtsverlust bei 300°C: 5,3 %; Biegefestigkeit: 102,6 $Nmm^{-2}$; Randfaserdehnung: 6,7 %; E-Modul: 2100 $Nmm^{-2}$; $K_{1C}$: 3,62 $Jm^{-2}$, $G_{1C}$: 5320 $Jm^{-2}$; Schlagfestigkeit: 83,5 $kJm^{-2}$, ε (45 Hz, R.T.): 2,4; ε (45 Hz, 200°C): 2,4; ε (1 kHz, R.T.): 2,4; ε (1 kHz, 200°C): 2,4; tanδ (%, 45 Hz, R.T.): 0,1; tanδ (%, 45 Hz, 200°C): 1,0; tanδ (%, 1 kHz, R.T.): 0,1; tanδ (%, 1 kHz, 200°C): 0,7; Wasseraufnahme (14 Tage, 70°C): <0,5 %; elektrische Durchschlagfestigkeit: 41,6

kVmm$^{-2}$

Beispiel 23:

170 g techn. Dicyclopentadien (Shell), 5,1 g Poly(norbornen) und 850 mg $(C_6H_{11})_3PRu(p\text{-}Cumen)Cl_2$ werden gemischt und 4h bei 90°C, gefolgt von 1h bei 120°C und anschliessend 4h bei 150°C erwärmt. Das erhaltene Polymer hat die folgenden Eigenschaften:
$T_g$: 119°C; Gewichtsverlust bei 300°C: 5,3 %; Biegefestigkeit: 102,3 Nmm$^{-2}$; Randfaserdehnung: 6,2 %; E-Modul: 2200 Nmm$^{-2}$; $K_{1C}$: 3,11 Jm$^{-2}$; $G_{1C}$: 3800 Jm$^{-2}$; Schlagfestigkeit: 84,4 kJm$^{-2}$

Beispiel 24:

150 g techn. Dicyclopentadien (Shell), 4,5 g Poly(norbornen), 225 g Quarzmehl W12 und 750 mg $(C_6H_{11})_3PRu(p\text{-}Cumen)Cl_2$ werden gemischt und 4h bei 90°C, gefolgt von 1h bei 120°C und anschliessend 4h bei 150°C erwärmt. Das erhaltene Polymer hat die folgenden Eigenschaften:
$T_g$: 118°C; Biegefestigkeit: 41,5 Nmm$^{-2}$; Randfaserdehnung: 1,3 %; E-Modul: 6800 Nmm$^{-2}$; $K_{1C}$: 2,51 Jm$^{-2}$; $G_{1C}$: 847 Jm$^{-2}$; ε (45 Hz, R.T.): 3,2; ε (45 Hz, 200°C): 7,5; ε (1 kHz, R.T.): 3,2; ε (1 kHz, 200°C): 4,3; tanδ (%, 45 Hz, R.T.): 0,4; tanδ (%, 45 Hz, 200°C): >20; tanδ (%, 1 kHz, R.T.): 0,1; tanδ (%, 1 kHz, 200°C): >20; Wasseraufnahme (14 Tage, 70°C): ca. 0,2 %

Beispiel 25:

150 g techn. Dicyclopentadien (Shell), 4,5 g Poly(norbornen), 279 g Quarzmehl W12 und 750 mg $(C_6H_{11})_3PRu(p\text{-}Cumen)Cl_2$ werden gemischt und 4h bei 90°C, gefolgt von 1h bei 120°C und anschliessend 4h bei 150°C erwärmt. Das erhaltene Polymer hat die folgenden Eigenschaften:
$T_g$: 121°C; Biegefestigkeit: 46,0 Nmm$^{-2}$; Randfaserdehnung: 1,1 %; E-Modul: 7800 Nmm$^{-2}$; $K_{1C}$: 3,45 Jm$^{-2}$; $G_{1C}$: 1380 Jm$^{-2}$

Beispiel 26:

170 g techn. Dicyclopentadien (Shell), 5,1 g Poly(butadien) und 850 mg $(C_6H_{11})_3PRu(p\text{-}Cumen)Cl_2$ werden gemischt und 4h bei 90°C, gefolgt von 1h bei 120°C und anschliessend 4h bei 150°C erwärmt. Das erhaltene Polymer hat die folgenden Eigenschaften:
$T_g$: 109°C; Gewichtsverlust bei 300°C: 4,9 %; Biegefestigkeit: 87,3 Nmm$^{-2}$; Randfaserdehnung: 6,3 %; E-Modul: 1900 Nmm$^{-2}$; $K_{1C}$: 3,36 Jm$^{-2}$; $G_{1C}$: 5050 Jm$^{-2}$; Schlagfestigkeit: 75,2 kJm$^{-2}$

Beispiel 27:

150 g techn. Dicyclopentadien (Shell), 4,5 g Poly(butadien), 225 g Quarzmehl W12 und 750 mg $(C_6H_{11})_3PRu(p\text{-}Cumen)Cl_2$ werden gemischt und 4h bei 90°C, gefolgt von 1h bei 120°C und anschliessend 4h bei 150°C erwärmt. Das erhaltene Polymer hat die folgenden Eigenschaften:
Tg: 117°C; Biegefestigkeit: 44,6 Nmm$^{-2}$; Randfaserdehnung: 1,7 %; E-Modul: 6050 Nmm$^{-2}$; $K_{1C}$: 3,52 Jm$^{-2}$; $G_{1C}$: 1870 Jm$^{-2}$; Schlagfestigkeit: 4,60 kJm$^{-2}$

Beispiel 28:

Im 250 ml Sulfierkolben mit Thermometer, $N_2$-Einlass und Tropftrichter werden 80 ml Wasser vorgelegt und $N_2$ gespült. Nun wird unter starkem Rühren eine Lösung von 0,5 Gew.% $(C_6H_{11})_3PRu(p\text{-}Cumen)Cl_2$ in 30 ml Dicyclopentadien innert 30 Sekunden aus dem Tropftrichter zugegeben und der Sulfierkolben gleichzeitig in das auf 120°C vorgeheizte Ölbad gestellt (Innentemperatur auf 100°C ansteigend). Nach 1,5 h wird das gebildete Polymer abfiltriert und im Vakuum (0,1 mbar) bei 50°C während 24 h getrocknet. Ausbeute: 11,0 g (36,7 %).

Beispiel 29:

12 ml Wasser, 160 mg Dresinate 731 (Tensid), 8,0 g Dicyclopentadien und 80 mg $(C_6H_{11})_3PRu(p\text{-}Cumen)Cl_2$ werden gemischt. Nach 2 h Rühren bei 150°C (Badtemperatur; Innentemperatur auf 140°C ansteigend) wird die Mischung abgekühlt und das gebildete Polymer in 300 ml Aceton ausgefällt. Ausbeute: 1,50 g (18,8 %); $T_g$ = 117°C

Beispiel 30:

12 ml Wasser, 8,0 g Dicyclopentadien und 40 mg $(C_6H_{11})_3PRu(p\text{-Cumen})Cl_2$ werden gemischt. Nach 4 h Rühren bei 150°C (Badtemperatur) wird die Mischung abgekühlt und das gebildete Polymer in 300 ml Aceton ausgefällt. Ausbeute: 5,28 g (66 %); $T_g$ = 59°C; Elementaranalyse: C 90,85 (berechnet); 88,80 (gefunden); H 9,14 (berechnet); 9,15 (gefunden)

Beispiel 31:

12 ml Wasser, 160 mg Triton X-100 (Fluka) (Tensid), 8,0 g Dicyclopentadien und 40 mg $(C_6H_{11})_3PRu(p\text{-Cumen})Cl_2$ werden gemischt. Nach 4 h Rühren bei 150°C (Badtemperatur) wird die Mischung abgekühlt und das gebildete Polymer in 300 ml Aceton ausgefällt Ausbeute: 7,2 g (90 %); $T_g$ = 143°C; Elementaranalyse: C 90,85 (berechnet); 88,70 (gefunden); H 9,14 (berechnet); 9,26 (gefunden)

Beispiel 32:

12 ml Wasser, 160 mg Disponil APE-256 (Henkel) (Tensid), 8,0 g Dicyclopentadien und 40 mg $(C_6H_{11})_3PRu(p\text{-Cumen})Cl_2$ werden gemischt. Nach 4 h Rühren bei 150°C (Badtemperatur) wird die Mischung abgekühlt und das gebildete Polymer in 300 ml Aceton ausgefällt. Ausbeute: 7,3 g (91 %); $T_g$ = 92°C; Elementaranalyse: C 90,85 (berechnet); 89,08 (gefunden); H 9,14 (berechnet); 9,21 (gefunden)

Beispiel 33:

24 ml Wasser, 320 mg Triton X-100 (Fluka) (Tensid), 16,0 g Dicyclopentadien und 80 mg $(C_6H_{11})_3PRu(p\text{-Cumen})Cl_2$ werden gemischt. Nach 4 h starkem Rühren bei 120°C (Badtemperatur; Innentemperatur auf maximal 90°C ansteigend) wird die Mischung abgekühlt und das gebildete Polymer in 300 ml Aceton ausgefällt. Ausbeute: 12,54 g (78,4 9b); $T_g$ = 131°C; Elementaranalyse: C 90,85 (berechnet); 87,95 (gefunden); H 9,14 (berechnet); 8,95 (gefunden)

**Patentansprüche**

1. Zusammensetzung aus (a) Dicyclopentadien alleine oder in Mischung mit einem gespannten Cycloolefin, und (b) einer katalytischen Menge mindestens einer carbenfreien, zweiwertig-kationischen Ruthenium- oder Osmiumverbindung als Einkomponenten-Katalysator, die mindestens eine Phosphingruppe und insgesamt 2 bis 5 Liganden an das Metallatom gebunden enthält, und die Säureanionen zum Ladungsausgleich enthält, dadurch gekennzeichnet dass es sich bei den Liganden um solche handelt, die ausgewählt sind aus der Gruppe von Liganden (A) bestehend aus Stickstoff ($N_2$); unsubstituierten oder mit OH, $C_1$-$C_4$-Alkyl, $C_1$-$C_4$-Alkoxy, $C_6$-$C_{12}$-Alyl oder Halogen substituierten monocyclischen, polycyclischen oder kondensierten Arenen mit 6 bis 24 C-Atomen; unsubstituierten oder mit $C_1$-$C_4$-Alkyl, $C_1$-$C_4$-Alkoxy oder Halogen substituierten monocyclischen Heteroarenen; kondensierten Heteroarenen; kondensierten Aren-Heteroarenen mit 3 bis 22 C-Atomen und 1 bis 3 Heteroatomen ausgewählt aus der Gruppe O, S und N; und unsubstituierten oder mit $C_1$-$C_4$-Alkyl, $C_1$-$C_4$-Alkoxy oder Halogen substituierten aliphatischen, cycloaliphatischen, aromatischen oder araliphatischen Nitrilen mit 1 bis 22 C-Atomen.

2. Zusammensetzung gemäss Anspruch 1, dadurch gekennzeichnet, dass die Ruthenium- oder Osmiumverbindungen insgesamt 2 oder 3 Liganden enthalten.

3. Zusammensetzung gemäss Anspruch 1, dadurch gekennzeichnet, dass es sich bei der Phosphingruppe um ein tertiäres Phosphin oder Phosphit mit 3 bis 40 C-Atomen handelt.

4. Zusammensetzung gemäss Anspruch 1, dadurch gekennzeichnet, dass es sich bei den cyclischen Olefinen um monocyclische Ringe oder polycyclische, überbrückte oder kondensierte Ringsysteme mit 2 bis 4 Ringen handelt, die unsubstituiert oder substituiert sind, die ein oder mehrere Heteroatome aus der Gruppe O, S, N und Si in einem oder mehreren Ringen enthalten, und die kondensierte aromatische oder heteroaromatische Ringe enthalten.

5. Zusammensetzung gemäss Anspruch 1, dadurch gekennzeichnet, dass die cyclischen Ringe 3 bis 16 Ringglieder enthalten.

6. Zusammensetzung gemäss Anspruch 4, dadurch gekennzeichnet, dass die cyclischen Olefine weitere nicht-aromatische Doppelbindungen enthalten.

7. Zusammensetzung gemäss Anspruch 1, dadurch gekennzeichnet, dass die Cycloolefine der Formel I

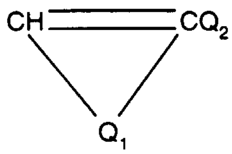

(I)

entsprechen, worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u$-, -COOM, $-SO_3M$, $-PO_3M$, $-COO(M_1)_{½}$, $-SO_3(M_1)_{½}$, $-PO_3(M_1)_{½}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X-substituiert ist; oder bei dem zwei benachbarte C-Atome mit -CO-O-CO- oder $-CO-NR_5-CO$-substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u$-, -COOM, $-SO_3M$, $-PO_3M$, $-COO(M_1)_{½}$, $-SO_3(M_1)_{½}$, $-PO_3(M_1)_{½}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2$-, -O-C(O)-, -C(O)-O-, $-C(O)-NR_5$-, $-NR_{10}-C(O)$-, $-SO_2-O$- oder $-O-SO_2$- stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder $-C(O)-NR_{12}$- ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9$- und -N= ausgewählt sind; und $R_9$ Wasserstoff, $C_1$-$C_{12}$-Alkyl, Phenyl oder Benzyl darstellt.

8. Zusammensetzung gemäss Anspruch 7, dadurch gekennzeichnet, dass der alicyclische Ring, den $Q_1$ zusammen mit der $-CH=CQ_2$-Gruppe bildet, 3 bis 16 Ringatome aufweist, und wobei es sich um ein monocyclisches, bicyclisches, tricyclisches oder tetracyclisches Ringsystem handelt.

9. Zusammensetzung gemäss Anspruch 7, dadurch gekennzeichnet, dass $Q_2$ in Formel I für Wasserstoff steht.

**10.** Zusammensetzung gemäss Anspruch 1, dadurch gekennzeichnet, dass es sich bei den cyclischen Olefinen um Norbornen oder Norbornenderivate handelt.

**11.** Zusammensetzung gemäss Anspruch 10, dadurch gekennzeichnet, dass es sich bei den Norbornenderivaten um solche der Formel II handelt,

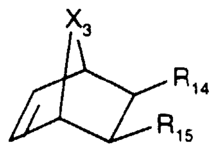

(II),

worin

| | |
|---|---|
| $X_3$ | $-CHR_{16}-$, Sauerstoff oder Schwefel; |
| $R_{14}$ und $R_{15}$ | unabhängig voneinander Wasserstoff, -CN, Trifluormethyl, $(CH_3)_3Si-O-$, $(CH_3)_3Si-$ oder $-COOR_{17}$; und |
| $R_{16}$ und $R_{17}$ | unabhängig voneinander Wasserstoff, $C_1$-$C_{12}$-Alkyl, Phenyl oder Benzyl bedeuten; |

oder der Formel III

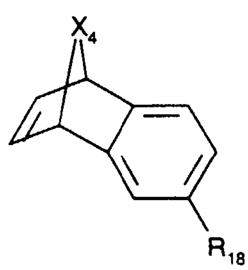

(III)

worin

| | |
|---|---|
| $X_4$ | $-CHR_{19}-$, Sauerstoff oder Schwefel; |
| $R_{19}$ | Wasserstoff, $C_1$-$C_{12}$-Alkyl, Phenyl oder Benzyl; und |
| $R_{18}$ | Wasserstoff, $C_1$-$C_6$-Alkyl oder Halogen bedeuten; |

oder der Formel IV

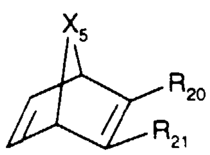

(IV),

worin

| | |
|---|---|
| $X_5$ | $-CHR_{22}-$, Sauerstoff oder Schwefel; |
| $R_{22}$ | Wasserstoff, $C_1$-$C_{12}$-Alkyl, Phenyl oder Benzyl; |
| $R_{20}$ und $R_{21}$ | unabhängig voneinander Wasserstoff, CN, Trifluormethyl, $(CH_3)_3Si-O-$, $(CH_3)_3Si-$ oder $-COOR_{23}$; und |
| $R_{23}$ | Wasserstoff, $C_1$-$C_{12}$-Alkyl, Phenyl oder Benzyl bedeuten; |

oder der Formel V entsprechen,

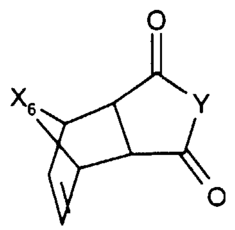

(V),

worin

$X_6$ -$CHR_{24}$-, Sauerstoff oder Schwefel;
$R_{24}$ Wasserstoff, $C_1$-$C_{12}$-Alkyl, Phenyl oder Benzyl;
Y Sauerstoff oder $\rangle N$-$R_{25}$ ; und
$R_{25}$ Wasserstoff, Methyl, Ethyl oder Phenyl bedeuten.

**12.** Zusammensetzung gemäss Anspruch 1, dadurch gekennzeichnet, dass das Cycloolefin nur Kohlenstoff und Wasserstoff enthält.

**13.** Zusammensetzung gemäss Anspruch 1, dadurch gekennzeichnet, dass das comonomere Cycloolefin in einer Menge von 0,01 bis 99 Gew.-% enthalten ist, bezogen auf die in der Zusammensetzung vorhandenen Monomeren.

**14.** Zusammensetzung gemäss Anspruch 1, dadurch gekennzeichnet, dass ein Monophosphin ein bis dreimal oder ein Diphosphin einmal an das Metallatom gebunden ist.

**15.** Zusammensetzung gemäss Anspruch 1, dadurch gekennzeichnet, dass die Phosphinliganden den Formeln VI oder VIa entsprechen,

$$PR_{26}R_{27}R_{28} \qquad (VI),$$

$$R_{26}R_{27}P\text{-}Z_1\text{-}PR_{26}R_{27} \qquad (VIa),$$

worin $R_{26}$, $R_{27}$ und $R_{28}$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellt; die Reste $R_{26}$ und $R_{27}$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetra- oder Pentamethylendioxyl bedeuten, oder unsubstituiertes oder mit $C_1$-$C_6$-Alkyl, $C_1$-$C_6$-Halogenalkyl oder $C_1$-$C_6$-Alkoxy substituiertes und mit 1 oder 2 1,2-Phenylen kondensiertem Tetra- oder Pentamethylen, oder Tetra- oder Pentamethylendioxyl darstellen, oder unsubstituiertes oder mit $C_1$-$C_6$-Alkyl, $C_1$-$C_6$-Halogenalkyl oder $C_1$-$C_6$-Alkoxy substituiertes und in den 1,2- und 3,4-Stellungen mit 1,2-Phenylen kondensiertes Tetramethylendioxyl darstellen, und $R_{28}$ die zuvor angegebene Bedeutung hat; und
$Z_1$ lineares oder verzweigtes, unsubstituiertes oder mit $C_1$-$C_4$-Alkoxy substituiertes $C_2$-$C_{12}$-Alkylen, unsubstituiertes oder mit $C_1$-$C_4$-Alkyl oder $C_1$-$C_4$-Alkoxy substituiertes 1,2- oder 1,3-Cycloalkylen mit 4 bis 8 C-Atomen, oder unsubstituiertes oder mit $C_1$-$C_4$-Alkyl oder $C_1$-$C_4$-Alkoxy substituiertes 1,2- oder 1,3-Heterocycloalkylen mit 5 oder 6 Ringgliedern und einem Heteroatom aus der Gruppe O oder N bedeutet.

**16.** Zusammensetzung gemäss Anspruch 15, dadurch gekennzeichnet, dass es sich bei den Resten $R_{26}$, $R_{27}$ und $R_{28}$ um gleiche Reste handelt.

**17.** Zusammensetzung gemäss Anspruch 15, dadurch gekennzeichnet, dass die Phosphinliganden der Formel VI entsprechen, worin $R_{26}$, $R_{27}$ und $R_{28}$ unabhängig voneinander H, $C_1$-$C_6$-Alkyl, unsubstituiertes oder mit $C_1$-$C_4$-Alkyl substituiertes Cyclopentyl oder Cyclohexyl, oder unsubstituiertes oder mit $C_1$-$C_4$-Alkyl, $C_1$-$C_4$-Alkoxy oder

Trifluormethyl substituiertes Phenyl oder unsubstituiertes oder mit $C_1$-$C_4$-Alkyl, $C_1$-$C_4$-Alkoxy oder Trifluormethyl substituiertes Benzyl darstellen.

**18.** Zusammensetzung gemäss Anspruch 15, dadurch gekennzeichnet, dass es sich bei den Phosphinliganden der Formel VI um $(C_6H_5)_3P$, $(C_6H_5CH_2)_3P$, $(C_5H_{11i})_3P$, $(CH_3)_3P$, $(C_2H_5)_3P$, (n-$C_3H_7$)$_3$P, (i-$C_3H_7$)$_3$P, (n-$C_4H_9$)$_3$P, $(C_6H_5)_2HP$, $(C_6H_5CH_2)_2HP$, $(C_5H_{11})_2HP$, $(CH_3)_2HP$, $(C_2H_5)_2HP$, (n-$C_3H_7$)$_2$HP, (i-$C_3H_7$)$_2$HP, (n-$C_4H_9$)$_2$HP, $(C_6H_5)H_2P$, $(C_6H_5CH_2)H_2P$, $(C_5H_{11})H_2P$, $(CH_3)H_2P$, $(C_2H_5)H_2P$, (n-$C_3H_7$)$H_2$P, (i-$C_3H_7$)$H_2$P, (n-$C_4H_9$)$H_2$P, $PH_3$, (2-Methyl-$C_6H_4$)$_3$P, (3-$CH_3$-$C_6H_4$)$_3$P, (4-$CH_3$-$C_6H_4$)$_3$P, (2,4-Di-$CH_3$-$C_6H_3$)$_3$P, (2,6-Di-$CH_3$-$C_6H_3$)$_3$P, (2-$C_2H_5$-$C_6H_4$)$_3$P, (3-$C_2H_5$-$C_6H_4$)$_3$P, (4-$C_2H_5$-$C_6H_4$)$_3$P, (2-n-$C_3H_7$-$C_6H_4$)$_3$P, (3-n-$C_3H_7$-$C_6H_4$)$_3$P, (4-n-$C_3H_7$-$C_6H_4$)$_3$P, (2-i-$C_3H_7$-$C_6H_4$)$_3$P, (3-1-$C_3H_7$-$C_6H_4$)$_3$P, (4-1-$C_3H_7$-$C_6H_4$)$_3$P, (2-n-$C_4H_9$-$C_6H_4$)$_3$P, (3-n-$C_4H_9$-$C_6H_4$)$_3$P, (4-n-$C_4H_9$-$C_6H_4$)$_3$P, (2-1-$C_4H_9$-$C_6H_4$)$_3$P, (3-1-$C_4H_9$-$C_6H_4$)$_3$P, (4-1-$C_4H_9$-$C_6H_4$)$_3$P, (2-t-$C_4H_9$-$C_6H_4$)$_3$P, (3-t-$C_4H_9$-$C_6H_4$)$_3$P, (4-t-$C_4H_9$-$C_6H_4$)$_3$P, (2-$CH_3$-6-t-$C_4H_9$-$C_6H_3$)$_3$P, (3-$CH_3$-6-t-$C_4H_9$-$C_6H_3$)$_3$P, (3-$CH_3$-6-t-$C_4H_9$-$C_6H_3$)$_3$P, (2,6-Di-t-$C_4H_9$-$C_6H_3$)$_3$P, (2,3-Di-t-$C_4H_9$-$C_6H_3$)$_3$P, $(C_6H_{11})_3P$, $(C_6H_{11})_2HP$, $(C_5H_9)_3P$, $(C_5H_9)_2HP$ oder (2,4-Di-t-$C_4H_9$-$C_6H_3$)$_3$P handelt.

**19.** Zusammensetzung gemäss Anspruch 1, dadurch gekennzeichnet, dass es sich bei den Liganden um unsubstituiertes oder mit ein bis drei $C_1$-$C_4$-Alkyl substituiertes Benzol, oder um Thiophen, Benzonitril oder Acetonitril handelt.

**20.** Zusammensetzung gemäss Anspruch 19, dadurch gekennzeichnet, dass es sich bei den Liganden um unsubstituiertes oder mit 1 bis 3 $C_1$-$C_4$-Alkyl substituiertes Benzol handelt.

**21.** Zusammensetzung gemäss Anspruch 1, dadurch gekennzeichnet, dass es sich bei den Arenen und Heteroarenen um Benzol, Cumen, Biphenyl, Naphthalin, Anthracen, Acenaphthen, Fluoren, Phenanthren, Pyren, Chrysen, Fluoranthren, Furan, Thiophen, Pyrrol, Pyridin, $\gamma$-Pyran, $\gamma$-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren oder Purin handelt.

**22.** Zusammensetzung gemäss Anspruch 1, dadurch gekennzeichnet, dass die Ruthenium- oder Osmiumverbindung zusätzlich einen Liganden enthält, ausgewählt aus der Gruppe von Liganden (B) bestehend aus die Heteroatome O, S oder N enthaltenden und solvatisierenden anorganischen und organischen Verbindungen; und unsubstituiertem oder mit $C_1$-$C_4$-Alkyl, $C_1$-$C_4$-Alkoxy, ($C_1$-$C_4$-Alkyl)$_3$Si oder ($C_1$-$C_4$-Alkyl)$_3$SiO- substituiertem Cyclopentadienyl oder Indenyl.

**23.** Zusammensetzung gemäss Anspruch 22, dadurch gekennzeichnet, dass die Liganden ausgewählt sind aus der Gruppe bestehend aus $H_2O$, $H_2S$, $NH_3$; gegebenenfalls halogenierten aliphatischen oder cycloaliphatischen Alkoholen oder Merkaptanen mit 1 bis 18 C-Atomen, aromatischen Alkoholen oder Thiolen mit 6 bis 18 C-Atomen, araliphatischen Alkoholen oder Thiolen mit 7 bis 18 C-Atomen; offenkettigen oder cyclischen und aliphatischen, araliphatischen oder aromatischen Ethern, Thioethern, Sulfoxiden, Sulfonen, Ketonen, Aldehyden, Carbonsäureestern, Lactonen, gegebenenfalls N-$C_1$-$C_4$-mono- oder -dialkylierten Carbonsäureamiden mit 2 bis 20 C-Atomen, und gegebenenfalls N-$C_1$-$C_4$-alkylierten Lactamen; offenkettigen oder cyclischen und aliphatischen, araliphatischen oder aromatischen, primären, sekundären und tertiären Aminen mit ein bis 20 C-Atomen; und Cyclopentadienylen.

**24.** Zusammensetzung gemäss Anspruch 23, dadurch gekennzeichnet, dass es sich bei den Liganden um $H_2O$, $NH_3$, unsubstituierte oder teilweise oder vollständig fluorierte $C_1$-$C_4$-Alkanole oder um Cyclopentadienyl handelt.

**25.** Zusammensetzung gemäss Anspruch 1, dadurch gekennzeichnet, dass die Anionen von anorganischen oder organischen Säuren ausgewählt sind aus der Gruppe Hydrid, Halogenid, das Anion einer Sauerstoffsäure, $BF_4$, $PF_6$, $SbF_6$ und $AsF_6$.

**26.** Zusammensetzung gemäss Anspruch 25, dadurch gekennzeichnet, dass es sich bei dem Anion einer Sauerstoffsäure um Sulfat, Phosphat, Perchlorat, Perbromat, Periodat, Antimonat, Arsenat, Nitrat, Carbonat, das Anion einer $C_1$-$C_8$-Carbonsäure, Sulfonat, gegebenenfalls mit $C_1$-$C_4$-Alkyl, $C_1$-$C_4$-Alkoxy oder Halogen substituiertes Phenylsulfonat oder Benzylsulfonat, oder Phosphonat handelt.

**27.** Zusammensetzung gemäss Anspruch 1, dadurch gekennzeichnet, dass die Säureanionen $H^-$, $F^-$, $Cl^-$, $Br^-$, $BF_4^-$, $PF_6^-$, $SbF_6^-$, $AsF_8^-$, $CF_3SO_3^-$, 4-$CF_3$-$C_6H_5$-$SO_3^-$, $C_6H_5$-$SO_3^-$, 4-Methyl-$C_6H_5$-$SO_3^-$, 3,5-Dimethyl-$C_6H_5$-$SO_3^-$, 2,4,6-Trimethyl-$C_6H_5$-$SO_3^-$ oder Cyclopentadienyl ($Cp^-$) sind.

**28.** Zusammensetzung gemäss Anspruch 1, dadurch gekennzeichnet, dass die Ruthenium- und Osmiumverbindungen einer der Formeln VII bis VIId entsprechen

$$R_{32}L_1Me^{2+}(Z^{n-})_{2/n} \quad \text{(VII)},$$

$$R_{32}L_1L_2Me^{2+}(Z^{n-})_{2/n} \quad \text{(VIIa)},$$

$$(R_{32})_2L_1Me^{2+}(Z^{n-})_{2/n} \quad \text{(VIIb)},$$

$$(R_{32})_3L_1Me^{2+}(Z^{n-})_{2/n} \quad \text{(VIIc)},$$

$$R_{32}(L_1)_2Me^{2+}(Z^{n-})_{2/n} \quad \text{(VIId)},$$

worin

$R_{32}$ ein Phosphinligand der Formel VI oder VIa gemäss Anspruch 15 ist;
Me für Ru oder Os steht;
n für die Zahlen 1, 2 oder 3 steht;
Z das Anion einer anorganischen oder organischen Säure ist;
$L_1$ einen Liganden der Gruppe A gemäss Anspruch 19, wobei die $L_1$ in Formel VIId gegebenenfalls verschieden sind, und
$L_2$ einen Liganden der Gruppe B gemäss Anspruch 23 bedeuten.

**29.** Zusammensetzung gemäss Anspruch 1, dadurch gekennzeichnet, dass die Ruthenium- und Osmiumverbindungen einer der Formeln VIII bis VIIId entsprechen

$$(R_{26}R_{27}R_{28}P)L_1Me^{2+}(Z_1^{1-})Z_2^{-1} \quad \text{(VIII)},$$

$$(R_{26}R_{27}R_{28}P)_2L_1Me^{2+}(Z_1^{1-})Z_2^{-1} \quad \text{(VIIIa)},$$

$$(R_{26}R_{27}R_{28}P)L_1L_2Me^{2+}(Z_1^{1-})Z_2^{-1} \quad \text{(VIIIb)},$$

$$(R_{26}R_{27}R_{28}P)_3L_1Me^{2+}(Z_1^{1-})Z_2^{-1} \quad \text{(VIIIc)},$$

$$(R_{26}R_{27}R_{28}P)(L_1)_2Me^{2+}(Z_1^{1-})Z_2^{-1} \quad \text{(VIIId)},$$

worin

Me für Ru oder Os steht;
$Z_1$ und $Z_2$ unabhängig voneinander $H^-$, Cyclopentadienyl, $Cl^-$, $Br^-$, $BF_4^-$, $PF_6^-$, $SbF_6^-$, $AsF_6^-$, $CF_3SO_3^-$, $C_6H_5$-$SO_3^-$, 4-Methyl-$C_6H_5$-$SO_3^-$, 3,5-Dimethyl-$C_6H_5$-$SO_3^-$, 2,4,6-Trimethyl-$C_6H_5$-$SO_3^-$ oder 4-$CF_3$-$C_6H_5$-$SO_3^-$ bedeuten;
$R_{26}$, $R_{27}$ und $R_{28}$ unabhängig voneinander $C_1$-$C_6$-Alkyl, unsubstituiertes oder mit 1 bis 3 $C_1$-$C_4$-Alkyl substituiertes Cyclopentyl oder Cyclohexyl oder Cyclopentyloxy oder Cyclohexyloxy, oder unsubstituiertes oder mit 1 bis 3 $C_1$-$C_4$-Alkyl substituiertes Phenyl oder Benzyl oder Phenyloxy oder Benzyloxy darstellen;
$L_1$ unsubstituiertes oder mit 1 bis 3 $C_1$-$C_4$-Alkyl, $C_1$-$C_4$-Alkoxy, -OH, -F oder Cl substituiertes $C_6$-$C_{16}$-Aren oder $C_5$-$C_{16}$-Heteroaren oder $C_1$-$C_6$-Alkyl-CN, Benzonitril oder Benzylnitril darstellt, wobei die $L_1$ in Formel

VIIId gegebenenfalls verschieden sind; und
$L_2$ $H_2O$ oder $C_1$-$C_6$-Alkanol ist.

**30.** Zusammensetzung gemäss Anspruch 1, dadurch gekennzeichnet, dass die Ruthenium- und Osmiumverbindungen ausgewählt sind aus der Gruppe bestehend aus [Tos ist gleich Tosylat]: $(C_6H_{11})_3PRu(i\text{-}C_3H_7\text{-}C_6H_5)(Tos)_2$, $(C_6H_{11})_3PRu(C_6H_6)(C_2H_5OH)_2(Tos)_2$, $(CH_3)_3PRu$(p-Cumen)$Cl_2$, $(C_6H_{11})_3PRu$(Anthracen)$(Tos)_2$, $(C_6H_5)_3PRu$(p-Cumen)HCl, $[(C_6H_{11})_3P]_3Ru(CH_3\text{-}CN)$, $(C_5H_9)_3PRu$(p-Cumen)$Cl_2$, $(C_6H_{11})_3PRu[(C_4H_9)\text{-}C_6H_5]Cl_2$, $(C_6H_{11})_3POs$(p-Cumen)$Cl_2$, $(C_6H_5)_3POs$(p-Cumen)$Cl_2$, (2-$CH_3C_6H_4)_3POs$(p-Cumen)$Cl_2$, $(C_6H_{11})_3PRu(C_6H_6)$(p-Cumen)$Br_2$, $(C_6H_{11})_3PRu(CH_3CN)Cl_2$, $(CH_3)_3POs$(p-Cumen)$Cl_2$, $(C_6H_{11})_3PRu[1,2,4,5\text{-}(CH_3)_4C_6H_2]Cl_2$, $RuCl_2$(p-Cumen)$[(C_6H_{11})_2PCH_2CH_2P(C_6H_{11})_2]$, $(C_6H_{11})_3PRu$(p-Cumen)$(CH_3\text{-}CN)_2(PF_6)_2$, $(C_6H_{11})_3PRu$(p-Cumen)$(CH_3\text{-}CN)_2(Tos)_2$, $(C_6H_{11})_3PRu$(p-Cumen)$(C_2H_5OH)_2(BF_4)_2$, $(C_6H_{11})_3PRu$(p-Cumen)$(C_2H_5OH)_2(PF_6)_2$, $(C_6H_{11})_3PRu[1,3,5\text{-}(i\text{-}C_3H_7)_3C_6H_3]Cl_2$, $(n\text{-}C_4H_9)_3PRu$(p-Cumen)$(CH_3\text{-}CN)_2(Tos)_2$, $(1\text{-}C_3H_7)_3PRu$(p-Cumen)$Cl_2$, $(n\text{-}C_4H_9)_3PRu$(p-Cumen)$Cl_2$, $(i\text{-}C_3H_7)_3POs$(p-Cumen)$Cl_2$,$(C_6H_{11})_3PRu$(Chrysen)$(Tos)_2$, $(C_6H_{11})_3PRu$(p-Cumen)$Cl_2$, $(C_6H_{11})_3PRu$(p-Cumen)$Br_2$,$(C_6H_{11})_3PRu$(p-Cumen)$(Tos)_2$, $(C_6H_{11})_3PRu$(p-Cumen)ClF, $(C_6H_{11})_3PRu(C_6H_6)(Tos)_2$,$(C_6H_{11})_3PRu(CH_3\text{-}C_6H_5)(Tos)_2$, $(C_6H_{11})_3PRu(CH_3\text{-}CN)_2Cl_2$, $(C_6H_{11})_3PRu$(p-Cumen)HCl, $(C_6H_{11})_2HPRu$(p-Cumen)$Cl_2$, $(C_6H_{11})_3PRu(CH_3\text{-}ON)(C_2H_5\text{-}OH)(Tos)_2$, $(C_6H_{11})_3PRu(C_{10}H_8)$(Tos)2, $(C_6H_{11})_3PRu$(p-Cumen)$(C_2H_5OH)(BF_4)_2$, $(C_6H_{11})_3PRu$(Biphenyl)$(Tos)_2$ und $[(C_6H_{11})_3P]_2Ru(CH_3\text{-}CN)(Tos)_2$.

**31.** Zusammensetzung gemäss Anspruch 30, dadurch gekennzeichnet, dass es sich bei dem Einkomponenten-Katalysator um $(C_6H_{11})_3PRu$(p-Cumen)$Cl_2$, $(C_5H_9)_3PRu$(p-Cumen)$Cl_2$ oder $[CH(CH_3)_2]_3PRu$(p-Cumen)$Cl_2$ handelt.

**32.** Zusammensetzung gemäss Anspruch 1, dadurch gekennzeichnet, dass sie zusätzlich ein Lösungsmittel enthält.

**33.** Zusammensetzung gemäss Anspruch 1, dadurch gekennzeichnet, dass der Einkomponenten-Katalysator in einer Menge von 0,001 bis 20 Mol-% enthalten ist, bezogen auf die Menge des Monomers.

**34.** Zusammensetzung gemäss Anspruch 33, dadurch gekennzeichnet, dass der Einkomponenten-Katalysator in einer Menge von 0,01 bis 15 Mol-% enthalten ist.

**35.** Zusammensetzung gemäss Anspruch 34, dadurch gekennzeichnet, dass der Einkomponenten-Katalysator in einer Menge von 0,01 bis 10 Mol-% enthalten ist.

**36.** Zusammensetzung gemäss Anspruch 35, dadurch gekennzeichnet, dass der Einkomponenten-Katalysator in einer Menge von 0,001 bis 2 Mol-% enthalten ist.

**37.** Zusammensetzung gemäss Anspruch 1, dadurch gekennzeichnet, dass sie Formulierungshilfstoffe enthält.

**38.** Zusammensetzung gemäss Anspruch 37, dadurch gekennzeichnet, dass sie die Formulierungshilfstoffe in einer Menge von 0,1 bis 70 Gew.-% enthält.

**39.** Verfahren zur Herstellung von Metathesepolymerisaten, das dadurch gekennzeichnet ist, dass man eine Zusammensetzung gemäss Anspruch 1 erwärmt.

**40.** Verfahren gemäss Anspruch 39, dadurch gekennzeichnet, dass es in verdünnter Lösung durchgeführt wird.

**41.** Verfahren gemäss Anspruch 39, dadurch gekennzeichnet, dass es bei einer Temperatur von mindestens 50°C durchgeführt wird.

**42.** Verfahren gemäss Anspruch 39, dadurch gekennzeichnet, dass die Temperatur von 60 bis 300°C beträgt.

**43.** Verfahren zur Herstellung von beschichteten Materialien, bei dem man eine Zusammensetzung gemäss Anspruch 1 und gegebenenfalls Lösungsmittel als Schicht auf einem Träger aufbringt, gegebenenfalls das Lösungsmittel entfernt, und die Schicht zur Polymerisation erwärmt.

**Claims**

**1.** Composition comprising (a) dicyclopentadiene, by itself or in a mixture with a stretched cycloolefin, and (b) a

catalytic amount of at least one carbene-free, divalent-cationic ruthenium or osmium compound as a single-component catalyst, which contains at least one phosphine group and a total of 2 to 5 ligands bonded to the metal atom, and which contains acid anions for charge balancing,
characterized in that the ligands are those which are chosen from the group consisting of ligands (A) consisting of nitrogen ($N_2$); monocyclic, polycyclic or fused arenes which have 6 to 24 C atoms and are unsubstituted or substituted by OH, $C_1$-$C_4$alkyl, $C_1$-$C_4$alkoxy, $C_6$-$C_{12}$aryl or halogen; monocyclic heteroarenes which are unsubstituted or substituted by $C_1$-$C_4$alkyl, $C_1$-$C_4$alkoxy or halogen; fused heteroarenes; fused arene-heteroarenes having 3 to 22 C atoms and 1 to 3 heteroatoms chosen from the group consisting of O, S and N; and aliphatic, cycloaliphatic, aromatic or araliphatic nitriles which have 1 to 22 C atoms and are unsubstituted or substituted by $C_1$-$C_4$alkyl, $C_1$-$C_4$alkoxy or halogen.

**2.** Composition according to claim 1, characterized in that the ruthenium or osmium compounds contain a total of 2 or 3 ligands.

**3.** Composition according to claim 1, characterized in that the phosphine group is a tertiary phosphine or phosphite having 3 to 40 C atoms.

**4.** Composition according to claim 1, characterized in that the cyclic olefins are monocyclic rings or polycyclic, bridged or fused ring systems having 2 to 4 rings, which are unsubstituted or substituted, which contain one or more heteroatoms from the group consisting of O, S, N and Si in one or more rings, and which contain fused aromatic or heteroaromatic rings.

**5.** Composition according to claim 1, characterized in that the cyclic rings contain 3 to 16 ring members.

**6.** Composition according to claim 4, characterized in that the cyclic olefins contain further non-aromatic double bonds.

**7.** Composition according to claim 1, characterized in that the cycloolefins correspond to the formula I

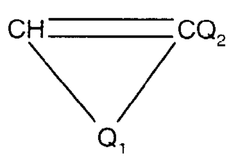

(I)

wherein

$Q_1$ is a radical having at least one carbon atom which, together with the $-CH=CQ_2-$ group, forms an alicyclic ring which has at least 3 members and which optionally contains one or more heteroatoms chosen from the group consisting of silicon, phosphorus, oxygen, nitrogen and sulfur; and which is unsubstituted or substituted by halogen, =O, -CN, $-NO_2$, $R_1R_2R_3Si-(O)_u-$, -COOM, $-SO_3M$, $-PO_3M$, $-COO(M_1)_{½}$, $-SO_3(M_1)_{½}$, $-PO_3(M_1)_{½}$, $C_1$-$C_{20}$alkyl, $C_1$-$C_{20}$hydroxyalkyl, $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or $-CO-NR_5-CO-$; or in which an alicyclic, aromatic or heteroaromatic ring, which is unsubstituted or substituted by halogen, -CN, $-NO_2$, $R_6R_7R_8Si-(O)_u-$, -COOM, $-SO_3M$, $-PO_3M$, $-COO(M_1)_{½}$, $-SO_3(M_1)_{½}$, $-PO_3(M_1)_{½}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_{13}-X_1-$, is optionally fused onto adjacent carbon atoms of the alicyclic ring;

X and $X_1$ independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$;

$R_1$, $R_2$ and $R_3$ independently of one another are $C_1$-$C_{12}$alkyl, $C_1$-$C_{12}$perfluoroalkyl, phenyl or benzyl;

$R_4$ and $R_{13}$ independently of one another are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;

$R_5$ and $R_{10}$ independently of one another are hydrogen, $C_1$-$C_{12}$alkyl, phenyl or benzyl, where the alkyl groups in their turn are unsubstituted or substituted by $C_1$-$C_{12}$alkoxy or $C_3$-$C_8$cycloalkyl;

| | |
|---|---|
| $R_6$, $R_7$ and $R_8$ | independently of one another are $C_1$-$C_{12}$alkyl, $C_1$-$C_{12}$perfluoroalkyl, phenyl or benzyl; |
| M | is an alkali metal and $M_1$ is an alkaline earth metal; and |
| u | is 0 or 1; |

in which the alicyclic ring formed with $Q_1$ optionally contains further non-aromatic double bonds;

| | |
|---|---|
| $Q_2$ | is hydrogen, $C_1$-$C_{20}$alkyl, $C_1$-$C_{20}$haloalkyl, $C_1$-$C_{12}$alkoxy, halogen, -CN or $R_{11}$-$X_2$-; |
| $R_{11}$ | is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl; |
| $X_2$ | is -C(O)-O- or -C(O)-$NR_{12}$-; |
| $R_{12}$ | is hydrogen, $C_1$-$C_{12}$alkyl, phenyl or benzyl; |

wherein the abovementioned cycloalkyl, heterocycloalkyl, aryl, heteroaryl, aralkyl and heteroaralkyl groups are unsubstituted or substituted by $C_1$-$C_{12}$alkyl, $C_1$-$C_{12}$alkoxy, $-NO_2$, -CN or halogen, and where the heteroatoms of the abovementioned heterocycloalkyl, heteroaryl and heteroaralkyl groups are chosen from the group consisting of -O-, -S-, $-NR_9$- and -N=; and $R_9$ is hydrogen, $C_1$-$C_{12}$alkyl, phenyl or benzyl.

**8.** Composition according to claim 7, characterized in that the alicyclic ring which $Q_1$ forms together with the $-CH=CQ_2$-group contains 3 to 16 ring atoms, and wherein this is a monocyclic, bicyclic, tricyclic or tetracyclic ring system.

**9.** Composition according to claim 7, characterized in that $Q_2$ in formula I is hydrogen.

**10.** Composition according to claim 1, characterized in that the cyclic olefins are norbornene or norbornene derivatives.

**11.** Composition according to claim 10, characterized in that the norbornene derivatives are those of the formula II

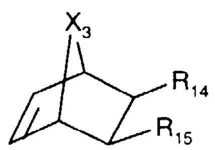

(II),

wherein

| | |
|---|---|
| $X_3$ | is $-CHR_{16}$-, oxygen or sulfur; |
| $R_{14}$ and $R_{15}$ | independently of one another are hydrogen, -CN, trifluoromethyl, $(CH_3)_3Si$-O-, $(CH_3)_3Si$- or $-COOR_{17}$; and |
| $R_{16}$ and $R_{17}$ | independently of one another are hydrogen, $C_1$-$C_{12}$alkyl, phenyl or benzyl; |

or to the formula III

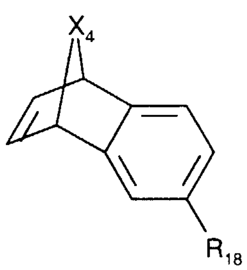

(III)

wherein

| | |
|---|---|
| $X_4$ | is $-CHR_{19}$-, oxygen or sulfur; |
| $R_{19}$ | is hydrogen, $C_1$-$C_{12}$alkyl, phenyl or benzyl; and |
| $R_{18}$ | is hydrogen, $C_1$-$C_6$alkyl or halogen; |

or to the formula IV

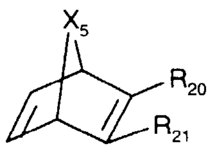

(IV),

wherein

| | |
|---|---|
| $X_5$ | is $-CHR_{22}-$, oxygen or sulfur; |
| $R_{22}$ | is hydrogen, $C_1$-$C_{12}$alkyl, phenyl or benzyl; |
| $R_{20}$ and $R_{21}$ | independently of one another are hydrogen, CN, trifluoromethyl, $(CH_3)_3Si-O-$, $(CH_3)_3Si-$ or $-COOR_{23}$; and |
| $R_{23}$ | is hydrogen, $C_1$-$C_{12}$alkyl, phenyl or benzyl; or to the formula V |

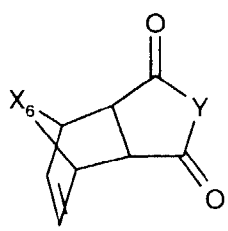

(V),

wherein

| | |
|---|---|
| $X_6$ | is $-CHR_{24}-$, oxygen or sulfur; |
| $R_{24}$ | is hydrogen, $C_1$-$C_{12}$alkyl, phenyl or benzyl; |
| Y | is oxygen or $>N-R_{25}$ ; and |
| $R_{25}$ | is hydrogen, methyl, ethyl or phenyl. |

**12.** Composition according to claim 1, characterized in that the cycloolefin contains only carbon and hydrogen.

**13.** Composition according to claim 1, characterized in that it comprises the comonomeric cycloolefin in an amount of 0.01 to 99% by weight, based on the monomers present in the composition.

**14.** Composition according to claim 1, characterized in that a monophosphine is bonded to the metal atom one to three times or a diphosphine is bonded once.

**15.** Composition according to claim 1, characterized in that the phosphine ligands correspond to the formulae VI or VIa

$$PR_{26}R_{27}R_{28} \quad (VI),$$

$$R_{26}R_{27}P-Z_1-PR_{26}R_{27} \quad (VIa),$$

wherein $R_{26}$, $R_{27}$ and $R_{28}$ independently of one another are H, $C_1$-$C_{20}$alkyl, $C_1$-$C_{20}$alkoxy, $C_4$-$C_{12}$cycloalkyl or cycloalkoxy which is unsubstituted or substituted by $C_1$-$C_6$alkyl, $C_1$-$C_6$haloalkyl or $C_1$-$C_6$alkoxy, or $C_6$-$C_{16}$aryl or $C_6$-$C_{16}$aryloxy which is unsubstituted or substituted by $C_1$-$C_6$alkyl, $C_1$-$C_6$haloalkyl or $C_1$-$C_6$alkoxy, or $C_7$-$C_{16}$aralkyl or $C_7$-$C_{16}$aralkyloxy which is unsubstituted or substituted by $C_1$-$C_6$alkyl, $C_1$-$C_6$haloalkyl or $C_1$-$C_6$alkoxy; the radicals $R_{26}$ and $R_{27}$ together are tetra- or pentamethylene or tetra- or pentamethylenedioxyl which is unsubstituted or substituted by $C_1$-$C_6$alkyl, $C_1$-$C_6$haloalkyl or $C_1$-$C_6$alkoxy, or tetra- or pentamethylene or tetra- or pentamethylenedioxyl which is unsubstituted or substituted by $C_1$-$C_6$alkyl, $C_1$-$C_6$haloalkyl or $C_1$-$C_6$alkoxy and fused with 1 or 2

1,2-phenylene, or tetramethylenedioxyl which is unsubstituted or substituted by $C_1$-$C_6$alkyl, $C_1$-$C_6$haloalkyl or $C_1$-$C_6$alkoxy and fused in the 1,2- and 3,4-positions with 1,2-phenylene, and $R_{28}$ has the abovementioned meaning; and $Z_1$ is linear or branched $C_2$-$C_{12}$alkylene which is unsubstituted or substituted by $C_1$-$C_4$alkoxy, 1,2- or 1,3-cycloalkylene which has 4 to 8 C atoms and is unsubstituted or substituted by $C_1$-$C_4$alkyl or $C_1$-$C_4$alkoxy, or 1,2- or 1,3-heterocycloalkylene which has 5 or 6 ring members and a heteroatom from the group consisting of O and N and is unsubstituted or substituted by $C_1$-$C_4$alkyl or $C_1$-$C_4$alkoxy.

**16.** Composition according to claim 15, characterized in that the radicals $R_{26}$, $R_{27}$ and $R_{28}$ are identical radicals.

**17.** Composition according to claim 15, characterized in that the phosphine ligands correspond to the formula VI wherein $R_{26}$, $R_{27}$ and $R_{28}$ independently of one another are H, $C_1$-$C_6$alkyl, cyclopentyl or cyclohexyl which are unsubstituted or substituted by $C_1$-$C_4$alkyl, or phenyl which is unsubstituted or substituted by $C_1$-$C_4$alkyl, $C_1$-$C_4$alkoxy or trifluoromethyl, or benzyl which is unsubstituted or substituted by $C_1$-$C_4$alkyl, $C_1$-$C_4$alkoxy or trifluoromethyl.

**18.** Composition according to claim 15, characterized in that the phosphine ligands of the formula VI are $(C_6H_5)_3P$, $(C_6H_5CH_2)_3P$, $(C_5H_{11})_3P$, $(CH_3)_3P$, $(C_2H_5)_3P$, $inC_3H_7)_3P$, $(i-C_3H_7)_3P$, $(n-C_4H_9)_3P$, $(C_6H_5)_2HP$, $(C_6H_5CH_2)_2HP$, $(C_5H_{11})_2HP$, $(CH_3)_2HP$, $(C_2H_5)_2HP$, $(n-C_3H_7)_2HP$, $(i-C_3H_7)_2HP$, $(n-C_4H_9)_2HP$, $(C_6H_5)H_2P$, $(C_6H_5CH_2)H_2P$, $(C_5H_{11})H_2P$, $(CH_3)H_2P$, $(C_2H_5)H_2P$, $(n-C_3H_7)H_2P$, $(i-C_3H_7)H_2P$, $(n-C_4H_9)H_2P$, $PH_3$, (2-methyl-$C_6H_4)_3P$, $(3-CH_3-C_6H_4)_3P$, $(4-CH_3-C_6H_4)_3P$, $(2,4-di-CH_3-C_6H_3)_3P$, $(2,6-di-CH_3-C_6H_3)_3P$, $(2-C_2H_5-C_6H_4)_3P$, $(3-C_2H_5-C_6H_4)_3P$, $(4-C_2H_5-C_6H_4)_3P$, $(2-n-C_3H_7-C_6H_4)_3P$, $(3-n-C_3H_7-C_6H_4)_3P$, $(4-n-C_3H_7-C_6H_4)_3P$, $(2-i-C_3H_7-C_6H_4)_3P$, $(3-i-C_3H_7-C_6H_4)_3P$, $(4-i-C_3H_7-C_6H_4)_3P$, $(2-n-C_4H_9-C_6H_4)_3P$, $(3-n-C_4H_9-C_5H_4)_3P$, $(4-n-C_4H_9-C_6H_4)_3P$, $(2-i-C_4H_9-C_6H_4)_3P$, $(3-i-C_4H_9-C_6H_4)_3P$, $(4-i-C_4H_9-C_6H_4)_3P$, $(2-t-C_4H_9-C_6H_4)_3P$, $(3-t-C_4H_9-C_5H_4)_3P$, $(4-t-C_4H_9-C_5H_4)_3P$, $(2-CH_3-6-t-C_4H_9-C_6H_3)_3P$, $(3-CH_3-6-t-C_4H_9-C_5H_3)_3P$, $(3-CH_3-6-t-C_4H_9-C_6H_3)_3P$, $(2,6-di-t-C_4H_9-C_6H_3)_3P$, $(2,3-di-t-C_4H_9-C_6H_3)_3P$, $(C_6H_{11})_3P$, $(C_6H_{11})_2HP$, $(C_5H_9)_3P$, $(C_5H_9)_2HP$ or $(2,4-di-t-C_4H_9-C_6H_3)_3P$.

**19.** Composition according to claim 1, characterized in that the ligands are benzene which is unsubstituted or substituted by one to three $C_1$-$C_4$alkyl, or thiophene, benzonitrile or acetonitrile.

**20.** Composition according to claim 19, characterized in that the ligands are benzene which is unsubstituted or substituted by 1 to 3 $C_1$-$C_4$alkyl.

**21.** Composition according to claim 1, characterized in that the arenes and heteroarenes are benzene, cumene, biphenyl, naphthalene, anthracene, acenaphthene, fluorene, phenanthrene, pyrene, chrysene, fluoroanthrene, furan, thiophene, pyrrole, pyridine, γ-pyran, γ-thiopyran, pyrimidine, pyrazine, indole, coumarone, thionaphthene, carbazole, dibenzofuran, dibenzothiophene, pyrazole, imidazole, benzimidazole, oxazole, thiazole, isoxazole, isothiazole, quinoline, isoquinoline, acridine, chromene, phenazine, phenoxazine, phenothiazine, triazines, thianthrene or purine.

**22.** Composition according to claim 1, characterized in that the ruthenium or osmium compound additionally contains a ligand chosen from the group consisting of ligands (B) consisting of solvating inorganic and organic compounds which contain the heteroatoms O, S or N; and cyclopentadienyl or indenyl which is unsubstituted or substituted by $C_1$-$C_4$alkyl, $C_1$-$C_4$alkoxy, $(C_1$-$C_4alkyl)_3Si$ or $(C_1$-$C_4alkyl)_3SiO$.

**23.** Composition according to claim 22, characterized in that the ligands are chosen from the group consisting of $H_2O$, $H_2S$ and $NH_3$; optionally halogenated, aliphatic or cycloaliphatic alcohols or mercaptans having 1 to 18 C atoms, aromatic alcohols or thiols having 6 to 18 C atoms, or araliphatic alcohols or thiols having 7 to 18 C atoms; open-chain or cyclic and aliphatic, araliphatic or aromatic ethers, thioethers, sulfoxides, sulfones, ketones, aldehydes, carboxylic acid esters, lactones, optionally N-$C_1$-$C_4$-mono- or -dialkylated carboxylic acid amides having 2 to 20 C atoms, and optionally N-$C_1$-$C_4$alkylated lactams; open-chain or cyclic and aliphatic, araliphatic or aromatic, primary, secondary and tertiary amines having one to 20 C atoms, and cyclopentadienyls.

**24.** Composition according to claim 23, characterized in that the ligands are $H_2O$, $NH_3$, unsubstituted or partly or completely fluorinated $C_1$-$C_4$alkanols or cyclopentadienyl.

**25.** Composition according to claim 1, characterized in that the anions of inorganic or organic acids are chosen from the group consisting of hydride, halide, the anion of an oxygen acid, $BF_4$, $PF_6$, $SbF_6$ and $AsF_6$.

**26.** Composition according to claim 25, characterized in that the anion of an oxygen acid is sulfate, phosphate, perchlorate, perbromate, periodate, antimonate, arsenate, nitrate, carbonate, the anion of a $C_1$-$C_8$carboxylic acid, sulfonate, phenylsulfonate or benzylsulfonate which is optionally substituted by $C_1$-$C_4$alkyl, $C_1$-$C_4$alkoxy or halogen, or phosphonate.

**27.** Composition according to claim 1, characterized in that the acid anions are $H^-$, $F^-$, $Cl^-$, $Br^-$, $BF_4^-$, $PF_6^-$, $SbF_6^-$, $AsF_6^-$, $CF_3SO_3^-$, 4-$CF_3$-$C_6H_5$-$SO_3^-$, $C_6H_5$-$SO_3^-$, 4-methyl-$C_6H_5$-$SO_3^-$, 3,5-dimethyl-$C_6H_5$-$SO_3^-$, 2,4,6-trimethyl-$C_6H_5$-$SO_3^-$ or cyclopentadienyl ($Cp^-$).

**28.** Composition according to claim 1, characterized in that the ruthenium and osmium compounds correspond to one of the formulae VII to VIId

$$R_{32}L_1Me^{2+}(Z^{n-})_{2/n} \qquad (VII),$$

$$R_{32}L_1L_2Me^{2+}(Z^{n-})_{2/n} \qquad (VIIa),$$

$$(R_{32})_2L_1Me^{2+}(Z^{n-})_{2/n} \qquad (VIIb),$$

$$(R_{32})_3L_1Me^{2+}(Z^{n-})_{2/n} \qquad (VIIc),$$

$$R_{32}(L_1)_2Me^{2+}(Z^{n-})_{2/n} \qquad (VIId),$$

wherein

$R_{32}$ is a phosphine ligand of the formula VI or VIa according to claim 15;
Me is Ru or Os;
n is the numbers 1, 2 or 3;
Z is the anion of an inorganic or organic acid;
$L_1$ is a ligand of group A according to claim 1, wherein the $L_1$ in formula VIId are optionally different, and
$L_2$ is a ligand of group B according to claim 22.

**29.** Composition according to claim 1, characterized in that the ruthenium and osmium compounds correspond to one of the formulae VIII to VIIId

$$(R_{26}R_{27}R_{28}P)L_1Me^{2+}(Z_1^{1-})Z_2^{-1} \qquad (VIII),$$

$$(R_{26}R_{27}R_{28}P)_2L_1Me^{2+}(Z_1^{1-})Z_2^{-1} \qquad (VIIIa),$$

$$(R_{26}R_{27}R_{28}P)L_1L_2Me^{2+}(Z_1^{1-})Z_2^{-1} \qquad (VIIIb),$$

$$(R_{26}R_{27}R_{28}P)_3L_1Me^{2+}(Z_1^{1-})Z_2^{-1} \qquad (VIIIc),$$

$$(R_{26}R_{27}R_{28}P)(L_1)_2Me^{2+}(Z_1^{1-})Z_2^{-1} \qquad (VIIIc),$$

wherein

Me is Ru or Os;
$Z_1$ and $Z_2$ independently of one another are $H^-$, cyclopentadienyl, $Cl^-$, $Br^-$, $BF_4^-$, $PF_6^-$, $SbF_6^-$, $AsF_6^-$, $CF_3SO_3^-$,

$C_6H_5-SO_3^-$, 4-methyl-$C_6H_5-SO_3^-$, 3,5-dimethyl-$C_6H_5-SO_3^-$, 2,4,6-trimethyl-$C_6H_5-SO_3^-$ or 4-$CF_3$-$C_6H_5-SO_3^-$;
$R_{26}$, $R_{27}$ and $R_{28}$ independently of one another are $C_1$-$C_6$alkyl, cyclopentyl or cyclohexyl or cyclopentyloxy or cyclohexyloxy which is unsubstituted or substituted by 1 to 3 $C_1$-$C_4$alkyl, or phenyl or benzyl or phenyloxy or benzyloxy which is unsubstituted or substituted by 1 to 3 $C_1$-$C_4$alkyl;
$L_1$ is $C_6$-$C_{16}$-arene or $C_5$-$C_{16}$heteroarene which is unsubstituted or substituted by 1 to 3 $C_1$-$C_4$alkyl, $C_1$-$C_4$alkoxy, -OH, -F or Cl, or $C_1$-$C_6$alkyl-CN, benzonitrile or benzylnitrile, wherein the $L_1$ in formula VIIId are optionally different; and
$L_2$ is $H_2O$ or $C_1$-$C_6$alkanol.

**30.** Composition according to claim 1, characterized in that the ruthenium and osmium compounds are chosen from the group consisting of [tos is tosylate]:
$(C_6H_{11})_3PRu(i\text{-}C_3H_7\text{-}C_6H_5)(tos)_2$, $(C_6H_{11})_3PRu(C_6H_6)(C_2H_5OH)_2(tos)_2$, $(CH_3)_3PRu(p\text{-cumene})Cl_2$, $(C_6H_{11})_3PRu(anthracene)(tos)_2$, $(C_6H_5)_3PRu(p\text{-cumene})HCl$, $[(C_6H_{11})_3P]_3Ru(CH_3\text{-}CN)$, $(C_5H_9)_3PRu(p\text{-cumene})Cl_2$, $(C_6H_{11})_3PRu[(C_4H_9)\text{-}C_6H_5]Cl_2$, $(C_6H_{11})_3POs(p\text{-cumene})Cl_2$, $(C_6H_5)_3POs(p\text{-cumene})Cl_2$, $(2\text{-}CH_3C_6H_4)_3POs(p\text{-cumene})Cl_2$, $(C_6H_{11})_3PRu(C_6H_6)(P\text{-cumene})Br_2$, $(C_6H_{11})_3PRu(CH_3CN)Cl_2$, $(CH_3)_3POs(p\text{-cumene})Cl_2$, $(C_6H_{11})_3PRu[1,2,4,5\text{-}(CH_3)_4C_6H_2]Cl_2$, $RuCl_2(p\text{-cumene})[(C_6H_{11})_2PCH_2CH_2P(C_6H_{11})_2]$, $(C_6H_{11})_3PRu(p\text{-cumene})(CH_3\text{-}CN)_2(PF_6)_2$, $(C_6H_{11})_3PRu(p\text{-cumene})(CH_3\text{-}CN)_2(tos)_2$, $(C_6H_{11})_3PRu(p\text{-cumene})(C_2H_5OH)_2(BF_4)_2$, $(C_6H_{11})_3PRu(p\text{-cumene})(C_2H_5OH)_2(PF_6)_2$, $(C_6H_{11})_3PRu[1,3,5\text{-}(i\text{-}C_3H_7)_3C_6H_3]Cl_2$, $(n\text{-}C_4H_9)_3PRu(p\text{-cumene})(CH_3\text{-}CN)_2(tos)_2$, $(i\text{-}C_3H_7)_3PRu(p\text{-cumene})Cl_2$, $(n\text{-}C_4H_9)_3PRu(p\text{-cumene})Cl_2$, $(i\text{-}C_3H_7)_3POs(p\text{-cumene})Cl_2$, $(C_6H_{11})_3PRu(chrysene)(tos)_2$, $(C_6H_{11})_3PRu(p\text{-cumene})Cl_2$, $(C_6H_{11})_3PRu(p\text{-cumene})Br_2$, $(C_6H_{11})_3PRu(p\text{-cumene})(tos)_2$, $(C_6H_{11})_3PRu(p\text{-cumene})ClF$, $(C_6H_{11})_3PRu(C_6H_6)(tos)_2$, $(C_5H_{11})_3PRu(CH_3\text{-}C_6H_5)(tos)_2$, $(C_6H_{11})_3PRu(CH_3\text{-}CN)_2Cl_2$, $(C_6H_{11})_3PRu(p\text{-cumene})HCl$, $(C_6H_{11})_2HPRu(p\text{-cumene})Cl_2$, $(C_6H_{11})_3PRu(CH_3\text{-}CN)(C_2H_5\text{-}OH)(tos)_2$, $(C_6H_{11})_3PRu(C_{10}H_8)(tos)_2$, $(C_5H_{11})_3PRu(p\text{-cumene})(C_2H_5OH)(BF_4)_2$, $(C_6H_{11})_3PRu(biphenyl)(tos)2$ and $[(C_6H_{11})_3P]_2Ru(CH_3\text{-}CN)(tos)_2$.

**31.** Composition according to claim 30, characterized in that the single-component catalyst is $(C_6H_{11})_3PRu(p\text{-cumene})Cl_2$, $(C_5H_9)_3PRu(p\text{-cumene})Cl_2$ or $[CH(CH_3)_2]_3PRu(p\text{-cumene})Cl_2$.

**32.** Composition according to claim 1, characterized in that it additionally comprises a solvent.

**33.** Composition according to claim 1, characterized in that it comprises the single-component catalyst in an amount of 0.001 to 20 mol%, based on the amount of the monomer.

**34.** Composition according to claim 33, characterized in that it comprises the single-component catalyst in an amount of 0.01 to 15 mol%.

**35.** Composition according to claim 34, characterized in that it comprises the single-component catalyst in an amount of 0.01 to 10 mol%.

**36.** Composition according to claim 35, characterized in that it comprises the single-component catalyst in an amount of 0.001 to 2 mol%.

**37.** Composition according to claim 1, characterized in that it comprises formulation auxiliaries.

**38.** Composition according to claim 37, characterized in that it comprises the formulation auxiliaries in an amount of 0.1 to 70% by weight.

**39.** Process for the preparation of metathesis polymers, which is characterized in that a composition according to claim 1 is heated.

**40.** Process according to claim 39, characterized in that it is carried out in dilute solution.

**41.** Process according to claim 39, characterized in that it is carried out at a temperature of at least 50°C.

**42.** Process according to claim 39, characterized in that the temperature is from 60 to 300°C.

**43.** Process for the preparation of coated materials, in which a composition according to claim 1 and if appropriate a solvent are applied as a layer to a carrier, the solvent is removed, if appropriate, and the layer is heated for polymerization.

**Revendications**

1. Composition de (a) dicyclopentadiène seul ou en mélange avec une cyclooléfine contrainte et de (b) une quantité catalytique d'au moins un composé de ruthénium ou d'osmium cationique bivalent, sans carbène, comme catalyseur à un seul composant, qui contient au moins un groupe phosphine et en tout 2 à 5 ligands liés à l'atome métallique, et contient les anions d'acide pour l'équilibrage de la charge, caractérisée en ce qu'il est question de ligands qui sont choisis parmi les ligands (A) constitués de l'azote ($N_2$); d'arènes monocycliques, polycycliques ou condensés avec 6 à 24 atomes de carbone, non substitués ou substitués avec OH, un groupe alkyle en $C_1$-$C_4$, alcoxy en $C_1$-$C_4$, aryle en $C_6$-$C_{12}$ ou un atome d'halogène; d'hétéroarènes monocycliques non substitués ou substitués avec un groupe alkyle en $C_1$-$C_4$, alcoxy en $C_1$-$C_4$ ou un atome d'halogène; d'hétéroarènes condensés; d'arène-hétéroarènes condensés avec 3 à 22 atomes de carbone et 1 à 3 hétéroatomes choisis parmi O, S et N; et de nitriles aliphatiques, cycloaliphatiques, aromatiques ou araliphatiques avec 1 à 22 atomes de carbone, non substitués ou substitués avec un groupe alkyle en $C_1$-$C_4$, alcoxy en $C_1$-$C_4$ ou un atome d'halogène.

2. Composition selon la revendication 1, caractérisée en ce que les composés de ruthénium et d'osmium contiennent en tout 2 ou 3 ligands.

3. Composition selon la revendication 1, caractérisée en ce qu'il s'agit pour le groupe phosphine d'une phosphine tertiaire ou d'un phosphite avec 3 à 40 atomes de carbone.

4. Composition selon la revendication 1, caractérisée en ce qu'il s'agit pour les oléfines cycliques de systèmes cycliques monocycliques ou polycycliques condensés ou pontés avec deux à quatre cycles, qui sont non substitués ou substitués, qui contiennent un ou plusieurs hétéroatomes choisis parmi O, S, N et Si dans un ou plusieurs cycles, et qui contiennent les cycles condensés aromatiques ou hétéroaromatiques.

5. Composition selon la revendication 4, caractérisée en ce que les noyaux cycliques contiennent 3 à 16 chaînons cycliques.

6. Composition selon la revendication 4, caractérisée en ce que les oléfines cycliques contiennent d'autres doubles liaisons non aromatiques.

7. Composition selon la revendication 1, caractérisée en ce que les cyclooléfines correspondent à la formule I

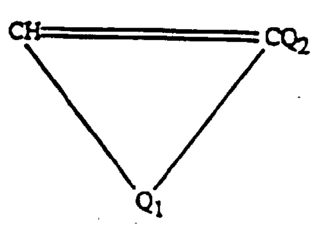

(I),

dans laquelle

$Q_1$ est un groupe avec au moins un atome de carbone, qui forme ensemble avec le groupe $-CH=CQ_2$- un cycle alicyclique à 3 chaînons, qui contient éventuellement un ou plusieurs hétéroatomes choisis parmi le silicium, le phosphore, l'oxygène, l'azote et le soufre; et qui est non substitué ou substitué avec un atome d'halogène, =O, -CN, $-NO_2$-, $R_1R_2R_3Si-(O)_u$-, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxy-alkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_4$-X-; ou dans lequel est condensé éventuellement à deux atomes de carbone voisins du cycle alicyclique un cycle alicyclique, aromatique ou hétéroaromatique, qui est non substitué ou substitué avec un atome d'halogène, un groupe -CN, $-NO_2$, $R_6R_7R_8Si-(O)_u$-, -COOM, $-SO_3M$, $-PO_3M$, $-COO(M_1)_{1/2}$, $-SO3(M_1)_{1/2}$, $-PO_3(M_1)_{1/2}$, alkyle en $C_1$-$C_{20}$, halogénoalkyle en $C_1$-$C_{20}$, hydroxyalk-

yle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}$-$X_1$-;

X et $X_1$ représentent indépendamment l'un de l'autre -O-, -S-, -CO-, -SO-, $-SO_2-$, -O-C(O)-, -C(O)-O-, -C(O)-$NR_5$-, -$NR_{10}$-C(O)-, $-SO_2-O-$ ou $-O-SO_2-$ ;

$R_1$, $R_2$ et $R_3$ signifient indépendamment l'un de l'autre un groupe alkyle en $C_1$-$C_{12}$, perfluoroalkyle en $C_1$-$C_{12}$, phényle ou benzyle;

$R_4$ et $R_{13}$ signifient indépendamment un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$;

$R_5$ et $R_{10}$ représentent indépendamment l'un de l'autre un atome d'hydrogène, un groupe alkyle en $C_1$-$C_{12}$, phényle ou benzyle, dans lequel les groupes alkyle sont de leur côté non substitués ou substitués avec un groupe alcoxy en $C_1$-$C_{12}$ ou cycloalkyle en $C_3$-$C_8$;

$R_6$, $R_7$ et $R_8$ signifient indépendamment l'un de l'autre un groupe alkyle en $C_1$-$C_{12}$, perfluoroalkyle en $C_1$-$C_{12}$, phényle ou benzyle;

M représente un métal alcalin et $M_1$ un métal alcalino-terreux; et

u représente 0 ou 1;

dans laquelle le cycle alicyclique formé avec $Q_1$ contient éventuellement d'autres doubles liaisons non aromatiques;

$Q_2$ représente un atome d'hydrogène, un groupe alkyle en $C_1$-$C_{20}$, halogénoalkyle en $C_1$-$C_{20}$, alcoxy en $C_1$-$C_{12}$, un atome d'halogène, un groupe -CN, $R_{11}$-$X_2$-;

$R_{11}$ représente un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralkyle en $C_7$-$C_{16}$;

$X_2$ est un groupe -C(O)-O- ou -C(O)-$NR_{12}$-;

$R_{12}$ représente un atome d'hydrogène, un groupe alkyle en $C_1$-$C_{12}$, phényle ou benzyle;

dans laquelle les groupes précités cycloalkyle, hétérocycloalkyle, aryle, hétéroaryle, aralkyle et hétéroararakyle sont non substitués ou substitués avec un groupe alkyle en $C_1$-$C_{12}$, alcoxy en $C_1$-$C_{12}$, $-NO_2$, -CN ou un atome d'halogène, et dans lequel les hétéroatomes des groupes hétérocycloalkyle, hétéroaryle et hétéroaralkyle précités sont choisis parmi un atome -O-, -S-, un groupe -$NR_9$- et -N=; et $R_9$ représente un atome d'hydrogène, un groupe alkyle en $C_1$-$C_{12}$, phényle ou benzyle.

**8.** Composition selon la revendication 7, caractérisée en ce que le cycle alicyclique, que forme $Q_1$ avec le groupe -CH=$CQ_2$, présente 3 à 16 atomes de cycle, et dans laquelle il s'agit d'un système cyclique monocyclique, bicyclique, tricyclique ou tétracyclique.

**9.** Composition selon la revendication 7, caractérisée en ce que $Q_2$ dans la formule I représente un atome d'hydrogène.

**10.** Composition selon la revendication 1, caractérisée en ce qu'il s'agit pour les oléfines cycliques du norbornène ou de dérivés du norbornène.

**11.** Composition selon la revendication lo, caractérisée en ce qu'il s'agit pour les dérivés du norbornène de ceux de formule II

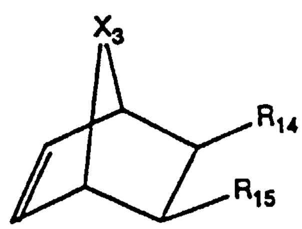

(II),

dans laquelle

$X_3$ représente -$CHR_{16}$-, un atome d'oxygène ou de soufre;

$R_{14}$ et $R_{15}$ représentent indépendamment l'un de l'autre un atome d'hydrogène, un groupe -CN, trifluorométhyle

thyle, $(CH_3)_3Si-O-$, $(CH_3)_3Si-$ ou $-COOR_{17}$; et

$R_{16}$ et $R_{17}$ représentent indépendamment l'un de l'autre un atome d'hydrogène, un groupe alkyle en $C_1$-$C_{12}$, phényle ou benzyle

ou de formule III

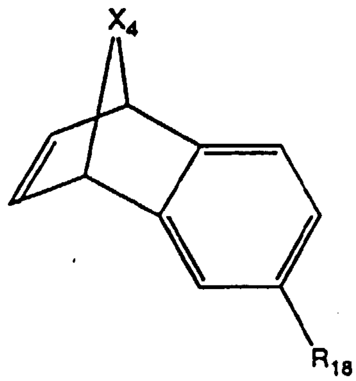

(III)

dans laquelle

$X_4$ représente $-CHR_{19}-$, un atome d'oxygène ou de soufre;

$R_{19}$ représente un atome d'hydrogène, un groupe alkyle en $C_1$-$C_{12}$, phényle ou benzyle; et

$R_{13}$ représente un atome d'hydrogène, un groupe alkyle en $C_1$-$C_6$ ou un atome d'halogène;

ou de formule IV

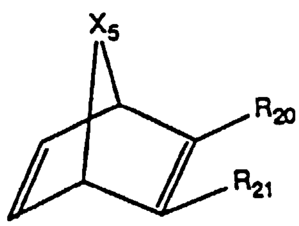

(IV),

dans laquelle

$X_5$ représente $-CHR_{22}-$, un atome d'oxygène ou de soufre;

$R_{22}$ représente un atome d'hydrogène, un groupe alkyle en $C_1$-$C_{12}$, phényle ou benzyle;

$R_{20}$ et $R_{21}$ représentent indépendamment l'un de l'autre un atome d'hydrogène, un groupe CN, trifluorométhyle, $(CH_3)_3Si-O-$, $(CH_3)_3Si-$ ou $-COOR_{23}$; et

$R_{23}$ représente un atome d'hydrogène, un groupe alkyle en $C_1$-$C_{12}$, phényle ou benzyle;

ou de formule IV

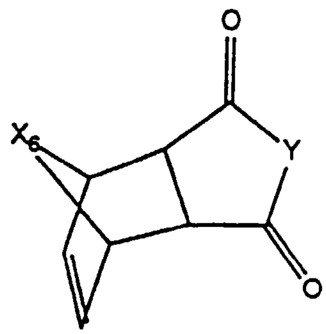

(V),

dans laquelle

$X_6$ représente $-CHR_{24}-$, un atome d'oxygène ou de soufre;
$R_{24}$ représente un atome d'hydrogène, un groupe alkyle en $C_1$-$C_{12}$, phényle ou benzyle;
Y représente un atome d'oxygène ou $>N-R_{25}$; et
$R_{25}$ représente un atome d'hydrogène, un groupe méthyle, éthyle ou phényle.

**12.** Composition selon la revendication 1, caractérisée en ce que la cyclooléfine contient seulement du carbone et de l'hydrogène.

**13.** Composition selon la revendication 1, caractérisée en ce qu'elle contient la cyclooléfine comonomère en une quantité de 0,01 à 99% en poids, par rapport aux monomères présents dans la composition.

**14.** Composition selon la revendication 1, caractérisée en ce qu'une monophosphine est liée une à deux fois ou une diphosphine une fois à l'atome de métal.

**15.** Composition selon la revendication 1, caractérisée en ce que les ligands phosphine correspondent aux formules VI ou VIa,

$$PR_{26}R_{27}R_{28} \quad (VI),$$

$$R_{26}R_{27}P-Z_1-PR_{26}R_{27} \quad (VIa),$$

dans lesquelles $R_{26}$, $R_{27}$ et $R_{28}$ représentent indépendamment les uns des autres H, un groupe alkyle en $C_1$-$C_{20}$, alcoxy en $C_1$-$C_{20}$, cycloalkyle ou cycloalcoxy en $C_4$-$C_{12}$ non substitué ou substitué avec un groupe alkyle en $C_1$-$C_6$, halogénoalkyle en $C_1$-$C_6$ ou alcoxy en $C_1$-$C_6$, ou aryle en $C_6$-$C_{16}$ non substitué ou substitué avec un groupe alkyle en $C_1$-$C_6$, halogénoalkyle en $C_1$-$C_6$ ou alcoxy en $C_1$-$C_6$, ou aryloxy en $C_6$-$C_{16}$, ou aralkyle en $C_7$-$C_{16}$ non substitué ou substitué avec un groupe alkyle en $C_1$-$C_6$, halogénoalkyle en $C_1$-$C_6$ ou alcoxy en $C_1$-$C_6$ ou aralkyloxy en $C_7$-$C_{16}$; les groupes $R_{26}$ et $R_{27}$ représentent ensemble un groupe tétra- ou pentaméthylène, ou tétra- ou pentaméthylèndioxyle non substitué ou substitué avec un groupe alkyle en $C_1$-$C_6$, halogénoalkyle en $C_1$-$C_6$ ou alcoxy en $C_1$-$C_6$, ou un groupe tétra- ou pentaméthylène, ou tétra- ou pentaméthylèndioxyle non substitué ou substitué avec un groupe alkyle en $C_1$-$C_6$, halogénoalkyle en $C_1$-$C_6$ ou alcoxy en $C_1$-$C_6$ et condensé avec 1 ou 2 groupes 1,2-phénylène, ou un groupe tétraméthylèndioxyle non substitué ou substitué avec un groupe alkyle en $C_1$-$C_6$, halogénoalkyle en $C_1$-$C_6$ ou alcoxy en $C_1$-$C_6$ et condensé en positions 1,2 et 3,4 avec un groupe 1,2-phénylène, et $R_{28}$ a la signification donnée précédemment; et
$Z_1$ représente un groupe alkylène en $C_2$-$C_{12}$ linéaire ou ramifié, non substitué ou substitué avec un groupe alcoxy en $C_1$-$C_4$, 1,2- ou 1,3-cycloalkylène avec 4 à 8 atomes de carbone non substitué ou substitué avec un groupe alkyle en $C_1$-$C_4$ ou alcoxy en $C_1$-$C_4$ ou 1,2- ou 1,3-hétérocycloalkylène avec 5 ou 6 chaînons cycliques non substitué ou substitué avec un groupe alkyle en $C_1$-$C_4$ ou alcoxy en $C_1$-$C_4$ et un hétéroatome choisi entre O et N.

**16.** Composition selon la revendication 15, caractérisée en ce que les groupes $R_{26}$, $R_{27}$ et $R_{28}$ sont des radicaux identiques.

**17.** Composition selon la revendication 15, caractérisée en ce que les ligands phosphine correspondent à la formule VI, dans laquelle $R_{26}$, $R_{27}$ et $R_{28}$ représentent indépendamment les uns des autres H, un groupe alkyle en $C_1$-$C_6$, cyclopentyle ou cyclohexyle non substitué ou substitué avec un groupe alkyle en $C_1$-$C_4$, ou phényle non substitué ou substitué avec un groupe alkyle en $C_1$-$C_4$, alcoxy en $C_1$-$C_4$ ou trifluorométhyle ou benzyle non substitué ou substitué avec un groupe alkyle en $C_1$-$C_4$, alcoxy en $C_1$-$C_4$ ou trifluorométhyle.

**18.** Procédé selon la revendication 15, caractérisé en ce que les ligands phosphine de formule VI concernés sont $(C_6H_5)_3P$, $(C_6H_5CH_2)_3P$, $(C_5H_{11})_3P$, $(CH_3)_3P$, $(C_2H_5)_3P$, $(n\text{-}C_3H_7)_3P$, $(i\text{-}C_3H_7)_3P$, $(n\text{-}C_4H_9)_3P$, $(C_6H_5)_2HP$, $(C_6H_5CH_2)_2HP$, $(C_5H_{11})_2HP$, $(CH_3)_2HP$, $(C_2H_5)_2HP$, $(n\text{-}C_3H_7)_2HP$, $(i\text{-}C_3H_7)_2HP$, $(n\text{-}C_4H_9)_2HP$, $(C_6H_5)H_2P$, $(C_6H_5CH_2)H_2P$, $(C_5H_{11})H_2P$, $(CH_3)H_2P$, $(C_2H_5)H_2P$, $(n\text{-}C_3H_7)H_2P$, $(i\text{-}C_3H_7)H_2P$, $(n\text{-}C_4H_9)H_2P$, $PH_3$, $(2\text{-méthyl-}C_6H_4)_3P$, $(3\text{-}CH_3\text{-}C_6H_4)_3P$, $(4\text{-}CH_3\text{-}C_6H_4)_3P$, $(2,4\text{-di-}CH_3\text{-}C_6H_3)_3P$, $(2,6\text{-di-}CH_3\text{-}C_6H_3)_3P$, $(2\text{-}C_2H_5\text{-}C_6H_4)_3P$, $(3\text{-}C_2H_5\text{-}C_6H_4)_3P$, $(4\text{-}C_2H_5\text{-}C_6H_4)_3P$, $(2\text{-n-}C_3H_7\text{-}C_6H_4)_3P$, $(3\text{-n-}C_3H_7\text{-}C_6H_4)_3P$, $(4\text{-n-}C_3H_7\text{-}C_6H_4)_3P$, $(2\text{-i-}C_3H_7\text{-}C_6H_4)_3P$, $(3\text{-i-}C_3H_7\text{-}C_6H_4)_3P$, $(4\text{-i-}C_3H_7\text{-}C_6H_4)_3P$, $(2\text{-n-}C_4H_9\text{-}C_6H_4)_3P$, $(3\text{-n-}C_4H_9\text{-}C_6H_4)_3P$, $(4\text{-n-}C_4H_9\text{-}C_6H_4)_3P$, $(2\text{-i-}C_4H_9\text{-}C_6H_4)_3P$, $(3\text{-1-}C_4H_9\text{-}C_6H_4)_3P$, $(4\text{-i-}C_4H_9\text{-}C_6H_4)_3P$, $(2\text{-t-}C_4H_9\text{-}C_6H_4)_3P$, $(3\text{-t-}C_4H_9\text{-}C_6H_4)_3P$, $(4\text{-t-}C_4H_9\text{-}C_6H_4)_3P$, $(2\text{-}CH_3\text{-6-t-}C_4H_9\text{-}C_6H_3)_3P$, $(3\text{-}CH_3\text{-6-t-}C_4H_9\text{-}C_6H_3)_3P$, $(3\text{-}CH_3\text{-6-t-}C_4H_9\text{-}C_6H_5)_3P$, $(2,6\text{-di-t-}C_4H_9\text{-}C_6H_3)_3P$, $(2,3\text{-di-t-}C_4H_9\text{-}C_6H_3)_3P$, $(C_6H_{11})_3P$, $(C_6H_{11})_2HP$, $(C_5H_9)_3P$, $(C_5H_9)_2HP$ ou $(2,4\text{-di-t-}C_4H_9\text{-}C_6H_3)_3P$.

**19.** Composition selon la revendication 1, caractérisée en ce qu'il est question pour les ligands de benzène non substitué ou substitué avec un à trois groupes alkyle en $C_1$-$C_4$, ou de thiophène, benzonitrile ou acétonitrile.

**20.** Composition selon la revendication 19, caractérisée en ce qu'il s'agit pour les ligands de benzène non substitué ou substitué avec 1 à 3 groupes alkyle en $C_1$-$C_4$.

**21.** Composition selon la revendication 1, caractérisée en ce qu'il est question pour les arènes et hétéroarènes du benzène, du eumène, du biphényle, du naptalène, de l'anthracène, de l'acénaphtène, du fluorène, du phénanthrène, du pyrène, du chrysène, du fluoroanthrène, du furane, du thiophène, du pyrrole, de la pyridine, du χ-pyrane, du χ-thiopyrane, de la pyrimidine, de la pyrazine, de l'indole, de la coumarone, du thionaphtène, du carbazol, le dibenzofurane, le dibenzothiophène, le pyrazole, de l'imidazole, du benzimidazole, de l'oxazol, du thiazol, de l'isoxazol, de l'isothiazol, de la quinoléine, de l'isoquinoléine, de l'acridine, du chromène, de la phénazine, de la phénoxazine, de la phénothiazine, de la triazine, du thianthrène ou de la purine.

**22.** Composition selon la revendication 1, caractérisée en ce que le composé de ruthénium ou d'osmium contient en plus un ligand, choisi parmi le groupe de ligands (B) constitué des composés organiques et inorganiques solvatant et contenant les hétéroatomes O, S ou N; et le cyclopentadiényle ou l'indényle non substitué ou substitué avec un groupe alkyle en $C_1$-$C_4$, alcoxy en $C_1$-$C_4$, (alkyle en $C_1$-$C_4$)$_3$Si ou (alkyle en $C_1$-$C_4$)$_3$SiO-.

**23.** Composition selon la revendication 22, caractérisée en ce que les ligands sont choisis parmi $H_2O$, $H_2S$, $NH_3$; les alcools ou les mercaptans aliphatiques ou cycloaliphatiques éventuellement halogénés, avec 1 à 18 atomes de carbone, les alcools ou les thiols aromatiques avec 6 à 18 atomes de carbone; les éthers, thioéthers, sulfoxydes, sulfones, cétones, aldéhydes, esters carboxyliques, lactones, éventuellement les carboxamides N-$C_1$-$C_4$-mono ou dialkylés avec 2 à 20 atomes de carbone, et éventuellement les lactames N-(alkylées en $C_1$-$C_4$) à chaîne ouverte ou cycliques et aliphatiques, araliphatiques ou aromatiques; des amines primaires, secondaires ou tertiaires avec un à 20 atomes de carbone à chaîne ouverte ou cycliques et aliphatiques, araliphatiques ou aromatiques; et le cyclopentadiénylène.

**24.** Composition selon la revendication 23, caractérisée en ce qu'il s'agit pour les ligands de $H_2O$, $NH_3$, des alcanols en $C_1$-$C_4$ non substitués ou complètement ou partiellement fluorés ou du cyclopentadiényle.

**25.** Compositions selon la revendication 1, caractérisée en ce que les anions d'acides organiques ou inorganiques sont choisis parmi les hydrures, les halogénures, l'anion d'un acide oxygéné, les anions $BF_4$, $PF_6$, $SbF_6$ ou $AsF_6$.

**26.** Composition selon la revendication 25, caractérisée en ce qu'il s'agit pour l'anion d'un acide oxygéné de sulfate, de phosphate, de perchlorate, de perbromate, de periodate, d'antimoniate, d'arséniate, de nitrate, de carbonate, de l'anion d'un acide carboxylique en $C_1$-$C_8$, de sulfonate, de phénylsulfonate ou de benzylsulfonate éventuellement substitué avec un groupe alkyle en $C_1$-$C_4$, alcoxy en $C_1$-$C_4$, ou un atome d'halogène, ou de phosphonate.

**27.** Composition selon la revendication 1, caractérisée en ce que les anions d'acide sont $H^-$, F-, $Cl^-$, $Br^-$, $BF_4^-$, $PF_6^-$, $SbF_6^-$, $AsF_6^-$, $CF_3SO_3^-$, $4\text{-}CF_3\text{-}C_6H_5\text{-}SO_3^-$, $C_6H_5\text{-}SO_3^-$, $4\text{-méthyl-}C_6H_5\text{-}SO_3^-$, $3,5\text{-diméthyl-}C_6H_5\text{-}SO_3^-$, 2,4,6-trimé-

thyl-$C_6H_5$-$SO_3^-$ ou le cyclopentadiényl($Cp^-$).

**28.** Composition selon la revendication 1, caractérisée en ce que les composés de ruthénium et d'osmium correspondent à l'une des formules VII à VIId

$$R_{32}L_1Me^{2+}(Z^{n-})_{2/n} \quad \text{(VII)},$$

$$R_{32}L_1L_2Me^{2+}(Z^{n-})_{2/n} \quad \text{(VIIa)},$$

$$(R_{32})_2L_1Me^{2+}(Z^{n-})_{2/n} \quad \text{(VIIb)},$$

$$(R_{32})_3L_1Me^{2+}(Z^{n-})_{2/n} \quad \text{(VIIc)},$$

$$R_{32}(L_1)_2Me^{2+}(Z^{n-})_{2/n} \quad \text{(VIId)},$$

dans lesquelles

$R_{32}$ est un ligand phosphine de formule VI ou VIa selon la revendication 15;
Me représente Ru ou Os;
n représente les nombres 1, 2 ou 3;
Z est l'anion d'un acide inorganique ou organique;
$L_1$ représente un ligand du groupe A selon la revendication 19, les $L_1$ dans la formule VIId sont éventuellement différents, et
$L_2$ représente un ligand du groupe B selon la revendication 23.

**29.** Composition selon la revendication 1, caractérisée en ce que les composés du ruthénium et de l'osmium correspondent à l'une des formules VIII à VIIId

$$(R_{26}R_{27}R_{28}P)L_1Me^{2+}(Z_1^{\ 1-})Z_2^{\ -1} \quad \text{(VIII)},$$

$$(R_{26}R_{27}R_{28}P)_2L_1Me^{2+}(Z_1^{\ 1-})Z_2^{\ -1} \quad \text{(VIIIa)},$$

$$(R_{26}R_{27}R_{28}P)L_1L_2Me^{2+}(Z_1^{\ 1-})Z_2^{\ -1} \quad \text{(VIIIb)},$$

$$(R_{26}R_{27}R_{28}P)_3L_1Me^{2+}(Z_1^{\ 1-})Z_2^{\ -1} \quad \text{(VIIIc)},$$

$$(R_{26}R_{27}R_{28}P)(L_1)_2Me^{2+}(Z_1^{\ 1-})Z_2^{\ -1} \quad \text{(VIIId)},$$

dans lesquelles

Me représente Ru ou Os;
$Z_1$ et $Z_2$ représentent indépendamment l'un de l'autre $H^-$, le cyclopentadiényle, $Cl^-$, $Br^-$, $BF_4^-$, $PF_6^-$, $SbF_6^-$, $AsF_6^-$, $CF_3SO_3^-$, $C_6H_5$-$SO_3^-$, 4-méthyl-$C_6H_5$-$SO_3^-$, 3,5-diméthyl-$C_6H_5$-$SO_3^-$, 2,4,6-triméthyl-$C_6H_5$-$SO_3^-$ ou 4-$CF_3$-$C_6H_5$-$SO_3^-$;
$R_{26}$, $R_{27}$ et $R_{28}$ représentent indépendamment les uns des autres un groupe alkyle en $C_1$-$C_6$, un groupe cyclopentyle ou cyclohexyle ou cyclopentyloxy ou cyclohexyloxy non substitué ou substitué avec 1 à 3 groupes alkyle en $C_1$-$C_4$, ou un groupe phényle ou benzyle ou phényloxy ou benzyloxy non substitué ou substitué avec

1 à 3 groupes alkyle en $C_1$-$C_4$;
$L_1$ représente un groupe arène en $C_6$-$C_{16}$ ou hétéroarène en $C_5$-$C_{16}$ ou (alkyle en $C_1$-$C_6$)-CN, non substitué ou substitué avec 1 à 3 groupes alkyle en $C_1$-$C_4$, alcoxy en $C_1$-$C_4$, -OH, -F, ou Cl, ou un groupe benzonitrile ou benzylnitrile, les $L_1$ dans la formule VIIId étant éventuellement différents; et
$L_2$ est $H_2O$ ou un groupe alcanol en $C_1$-$C_6$.

**30.** Composition selon la revendication 1, caractérisée en ce que les composés de ruthénium et d'osmium sont choisis parmi [Tos est égal à tosylate] : $(C_6H_{11})_3PRu(i\text{-}C_3H_7\text{-}C_6H_5)(Tos)_2$, $(C_6H_{11})_3PRu(C_6H_6)(C_2H_5OH)(Tos)_2$, $(CH_3)_3PRu$ (p-cumène)$Cl_2$, $(C_6H_{11})_3PRu$(antracène)$(Tos)_2$, $(C_6H_5)_3PRu$(p-cumène)HCl, $[(C_6H_{11})_3P]_3Ru(CH_3\text{-}CN)$, $(C_5H_9)_3PRu$ (p-cumène)$Cl_2$, $(C_6H_{11})_3PRu[(C_4H_9)\text{-}C_6H_5]Cl_2$, $(C_6H_{11})_3POs$(p-cumène)$Cl_2$, $(C_6H_5)_3POs$(p-cumène)$Cl_2$, $(2\text{-}CH_3C_6H_4)_3POs$(p-cumène)$Cl_2$, $(C_6H_{11})_3PRu(C_6H_6)$(p-cumène)$Cl_2$, $(C_6H_{11})_3PRu[1,2,4,5\text{-}(CH_3)_4C_6H_2]Cl_2$, $RuCl_2$(p-cumène)$[(C_6H_{11})_2PCH_2CH_2P(C_6H_{11})_2]$, $(C_6H_{11})_3PRu$(p-cumène)$(CH_3\text{-}CN)_2(PF_6)_2$, $(C_6H_{11})_3PRu$(p-cumène)$(CH_3\text{-}CN)_2(Tos)_2$, $(C_6H_{11})_3PRu$(p-cumène)$(C_2H_5OH)_2(BF_4)_2$, $(C_6H_{11})_3PRu$(p-cumène) $(C_2H_5OH)_2(PF_6)_2$, $(C_6H_{11})_3PRu[1,3,5\text{-}(i\text{-}(C_3H_7)_3C_6H_3]Cl_2$, $(n\text{-}C_4H_9)_3PRu$(p-cumène)$(CH_3\text{-}CN)_2(Tos)_2$, $(i\text{-}C_3H_7)_3PRu$(p-cumène)$Cl_2$, $(n\text{-}C_4H_9)_3PRu$(p-cumène)$Cl_2$, $(i\text{-}C_3H_7)_3POs$(p-cumène)$Cl_2$, $(C_6H_{11})_3PRu$(chrysène) $Cl_2$, $(C_6H_{11})_3PRu$(p-Cumène)$Cl_2$, $(C_6H_{11})_3PRu$(p-cumène)$Br_2$, $(C_6H_{11})_3PRu$(p-cumène)$(Tos)_2$, $(C_6H_{11})_3PRu$(p-cumène)ClF, $(C_6H_{11})_3PRu(C_6H_6)(Tos)_2$, $(C_6H_{11})_3PRu(CH_3\text{-}C_6H_5)(Tos)_2$, $(C_6H_{11})_3PRu(CH_3\text{-}CN)Cl_2$, $(C_6H_{11})_3PRu$ (p-cumène)HCl, $(C_6H_{11})_2HPRu$(p-cumène)$Cl_2$, $(C_6H_{11})_3PRu(C_2H_5\text{-}OH)(Tos)_2$, $(C_6H_{11})_3PRu(C_{10}H_8)(Tos)_2$, $(C_6H_{11})_3PRu$(p-cumène)$(C_2H_5OH)(BF_4)_2$, $(C_6H_{11})_3PRu$(biphényle)$(Tos)_2$ et $[(C_6H_{11})_3P]_2Ru(CH_3\text{-}CN)(Tos)_2$.

**31.** Composition selon la revendication 30, caractérisée en ce qu'on utilise comme catalyseur à un composant $(C_6H_{11})_3PRu$(p-cumène) $Cl_2$, $(C_5H_9)_3PRu$(p-cumène)$Cl_2$ ou $[CH(CH_3)_2]_3PRu$(p-cumène)$Cl_2$.

**32.** Composition selon la revendication 1, caractérisée en ce qu'elle contient en plus un solvant.

**33.** Composition selon la revendication 1, caractérisée en ce qu'elle contient le catalyseur à un seul composant en une quantité de 0,001 à 20% en mole, par rapport à la quantité du monomère.

**34.** Composition selon la revendication 33, caractérisée en ce qu'elle contient le catalyseur à un seul composant en une quantité de 0,01 à 15% en mole.

**35.** Composition selon la revendication 34, caractérisée en ce qu'elle contient le catalyseur à un seul composant en une quantité de 0,01 à 10% en mole.

**36.** Composition selon la revendication 35, caractérisée en ce qu'elle contient le catalyseur à un seul composant en une quantité de 0,001 à 2% en mole.

**37.** Composition selon la revendication 1, caractérisée en ce qu'elle contient des adjuvants de formulation.

**38.** Composition selon la revendication 37, caractérisée en ce qu'elle contient les adjuvants de formulation en une quantité de 0,1 à 70% en poids.

**39.** Procédé de préparation de composés de polymérisation par double décomposition, qui est caractérisé en ce qu'on chauffe une composition selon la revendication 1.

**40.** Procédé selon la revendication 39, caractérisé en ce qu'il est réalisé en solution diluée.

**41.** Procédé selon la revendication 39, caractérisé en ce qu'il est réalisé à une température d'au moins 50°C.

**42.** Procédé selon la revendication 39, caractérisé en ce que la température est de 60 à 300°C.

**43.** Procédé de préparation de matériaux enduits, dans lequel on dépose une couche d'une composition selon la revendication 1 et éventuellement un solvant sur un support, qu'on élimine éventuellement le solvant, et qu'on chauffe la couche pour la polymérisation.